(19) Europäisches Patentamt
European Patent Office
Office européen des brevets

(11) EP 4 782 402 A1

(12) # EUROPEAN PATENT APPLICATION
published in accordance with Art. 153(4) EPC

(43) Date of publication:
**29.07.2026 Bulletin 2026/31**

(21) Application number: **24868274.2**

(22) Date of filing: **18.09.2024**

(51) International Patent Classification (IPC):
***C01B 33/02*** *(2006.01)*

(52) Cooperative Patent Classification (CPC):
**C01B 33/02**

(86) International application number:
**PCT/JP2024/033245**

(87) International publication number:
**WO 2025/063197 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151414**

(71) Applicant: **National Institute of Advanced Industrial Science and Technology**
**Chiyoda-ku**
**Tokyo 100-8921 (JP)**

(72) Inventors:
- **IGARASHI, Masayasu**
**Tsukuba-shi, Ibaraki 305-8560 (JP)**
- **MATSUMOTO, Tomohiro**
**Tsukuba-shi, Ibaraki 305-8560 (JP)**
- **YAGIHASHI, Fujio**
**Tsukuba-shi, Ibaraki 305-8560 (JP)**
- **NOZAWA, Takeshi**
**Tsukuba-shi, Ibaraki 305-8560 (JP)**
- **NISHITOBA, Toshiki**
**Tsukuba-shi, Ibaraki 305-8560 (JP)**
- **SATOU, Junichi**
**Tsukuba-shi, Ibaraki 305-8560 (JP)**

(74) Representative: **V.O.**
**P.O. Box 87930**
**2508 DH Den Haag (NL)**

(54) **CRYSTAL, METHOD FOR PRODUCING CRYSTAL, AND METHOD FOR INDUCING SELF-ORGANIZATION OF SILANOL COMPOUND**

(57) The present invention provides a crystal comprising a plurality of silanol compounds represented by the following formula (1) and having an interaction via a hydrogen bond by at least one hydroxy group between the silanol compounds.

EP 4 782 402 A1

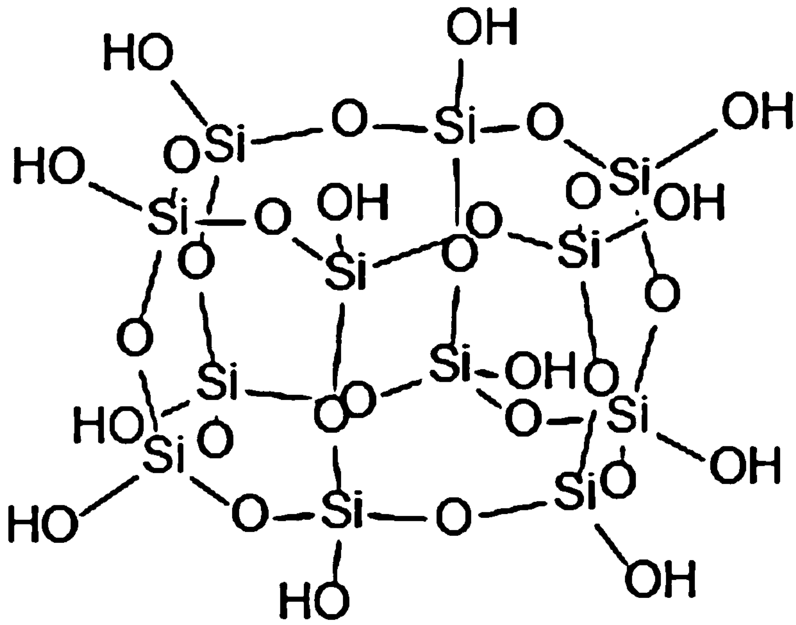

(1)

[Figure 2]

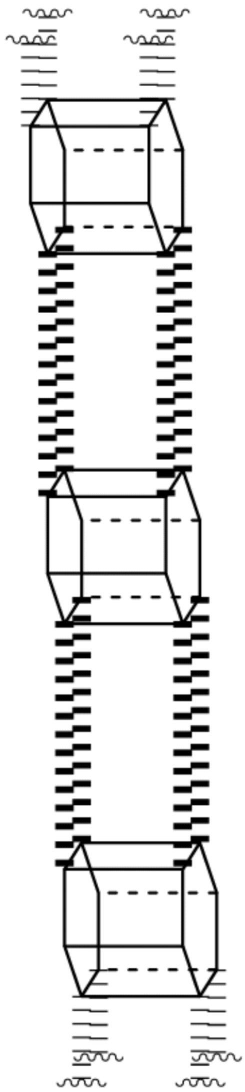

## Description

### Technical Field

The present invention relates to a crystal, a method of producing a crystal, and a method of self-organizing a silanol compound.

### Background Art

Construction by controlling a substance at the atomic level can develop an unprecedented physical property to provide a useful material. For example, a fullerene, a carbon nanotube, and a graphene are nanocarbon materials in which carbon is put up in 0 dimensions, 1 dimension, and 2 dimensions, respectively, and each have a unique physical property.
$SiO_2$ is a material that exists inexhaustibly on the earth as does carbon and has been used until now. As a method of obtaining a $SiO_2$ material constructed by controlling $SiO_2$ at the atomic level like a nanocarbon material, a method of putting up orthosilicic acid ($Si(OH)_4$), which is a basic unit of $SiO_2$, is considered to be efficient.
It is known that $Si(OH)_4$ can be synthesized and isolated, for example, by reacting a silicon compound having a benzyl protecting group that can be removed by hydrocracking in the presence of a Pd or Pt/C catalyst (see, for example, Non-Patent Literature 1). In addition, the above method has succeeded in synthesizing and isolating a dimer, a cyclic trimer, and a cyclic tetramer of $Si(OH)_4$. Oligomers such as these dimer, cyclic trimer, and cyclic tetramer of $Si(OH)_4$ are also useful as a raw material for obtaining a $SiO_2$ material.

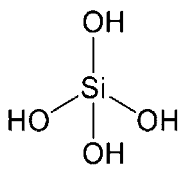
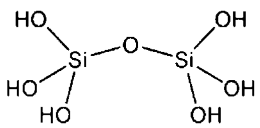
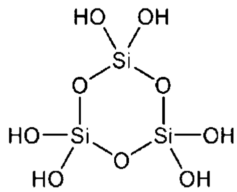
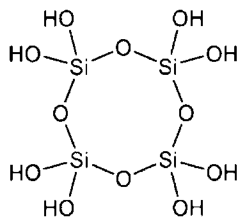

### Citation List

### Non-Patent Literature

Non-Patent Literature 1: Nature Communications, 2017, 8, 140.

### Summary of Invention

### Technical Problem

In order to obtain a $SiO_2$ material constructed by controlling $SiO_2$ at the atomic level, as described above, a method of putting up orthosilicic acid ($Si(OH)_4$), which is a basic unit of $SiO_2$, is considered. As described above, although the isolation of $Si(OH)_4$ and the dimer, the cyclic trimer, and the cyclic tetramer of $Si(OH)_4$ has been achieved, there is a demand for a raw material suitable for more efficiently controlling and putting up the basic unit of $SiO_2$ in order to obtain a $SiO_2$ material.
The present invention has been made in view of the above circumstances, and an object of the present invention is to provide a raw material useful for obtaining a $SiO_2$ material.

### Solution to Problem

As a result of intensive studies to solve the above problem, the present inventors have found that a predetermined oligomer of $Si(OH)_4$ self-organizes while being controlled at the atomic level, and the oligomer can be obtained as a regularly aligned crystal, and have completed the present invention.
That is, this application provides the following inventions.

[1] A crystal comprising a plurality of silanol compounds represented by the following formula (1) and having an interaction via a hydrogen bond by at least one hydroxy group between the silanol compounds.

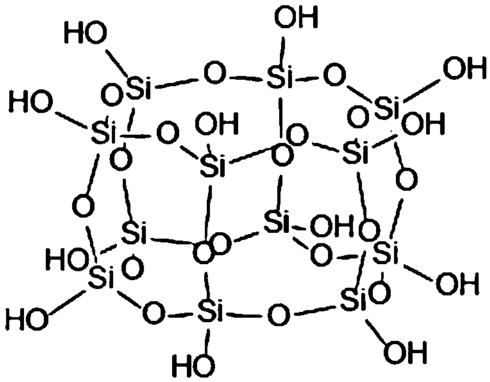

(1)

[2] The crystal according to [1], wherein the crystal has a one-dimensional structure in which the silanol compounds are linearly aligned by the interaction via a hydrogen bond.

[3] The crystal according to [1], wherein the crystal has a two-dimensional structure in which the silanol compounds are planarly aligned by the interaction via a hydrogen bond.

[4] The crystal according to [1], wherein the crystal has a three-dimensional structure in which the silanol compounds are sterically aligned by the interaction via a hydrogen bond.

[5] The crystal according to any of [1] to [4], wherein the crystal comprises at least one substance selected from the group consisting of an organic compound, a transition metal complex, an inorganic substance, and an elemental substance.

[6] A method of producing the crystal according to any of [1] to [5], the method comprising:

a step of preparing a solution containing the silanol compounds; and

a step of carrying out recrystallization by a vapor diffusion process applied to the solution and optionally by further adding at least one substance selected from the group consisting of an organic compound, a transition metal complex, an inorganic substance, and an elemental substance to the solution.

[7] A method of producing the crystal according to any of [1] to [5], the method comprising:

a step of preparing a solution containing the silanol compounds; and
a step of carrying out recrystallization by a poor solvent process applied to the solution and optionally by further adding at least one substance selected from the group consisting of an organic compound, a transition metal complex, an inorganic substance, and an elemental substance to the solution.

[8] A method of producing the crystal according to any of [1] to [5], the method comprising:

a step of preparing a solution containing the silanol compounds; and

a step of carrying out recrystallization by concentrating the solution under reduced pressure and optionally by further adding at least one substance selected from the group consisting of an organic compound, a transition metal complex, an inorganic substance, and an elemental substance to the solution.

[9] A method of producing the crystal according to any of [1] to [5], the method comprising:

a step of preparing a solution containing the silanol compounds; and

a step of carrying out recrystallization by cooling the solution and optionally by further adding at least one substance selected from the group consisting of an organic compound, a transition metal complex, an inorganic substance, and an elemental substance to the solution.

[10] A method of producing the crystal according to any of [1] to [5], the method comprising:

a step of preparing a solution containing the silanol compounds; and

a step of carrying out recrystallization by heating the solution and optionally by further adding at least one substance selected from the group consisting of an organic compound, a transition metal complex, an inorganic substance, and an elemental substance to the solution.

[11] A method of producing a crystal (P) comprising at least one substance selected from the group consisting of an organic compound, a transition metal complex, an inorganic substance, and an elemental substance, the method comprising:

a step of preparing a crystal (S) comprising a plurality of silanol compounds represented by the following formula (1), having an interaction via a hydrogen bond by at least one hydroxy group between the silanol compounds, and comprising at least one first substance selected from the group consisting of an organic compound, a transition metal complex, an inorganic substance, and an elemental substance; and
a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

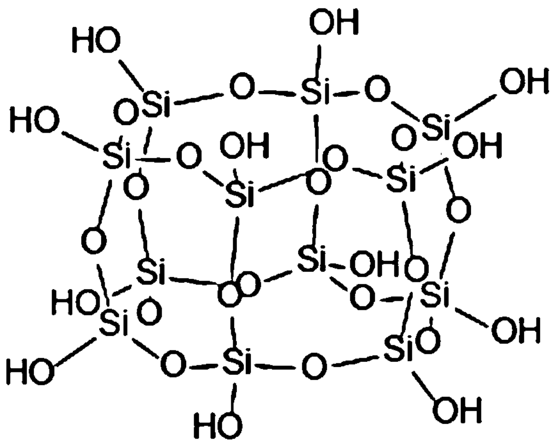

(1)

[12] The method according to [11], wherein the step of preparing a crystal (S) comprises:

a step of preparing a solution containing the silanol compounds; and

a step of carrying out recrystallization by a vapor diffusion process applied to the solution, or by a poor solvent process applied to the solution, or by concentrating the solution under reduced pressure, or by cooling the solution, or by heating the solution, and optionally by further adding at least one substance selected from the group consisting of an organic compound, a transition metal complex, an inorganic substance, and an elemental substance to the solution.

[13] A method of self-organizing a silanol compound represented by the following formula (1), the method comprising: a step of forming an interaction by a hydrogen bond by a vapor diffusion process applied to a solution containing the silanol compound, or by a poor solvent process applied to the solution, or by concentrating the solution under reduced pressure, or by cooling the solution, or by heating the solution.

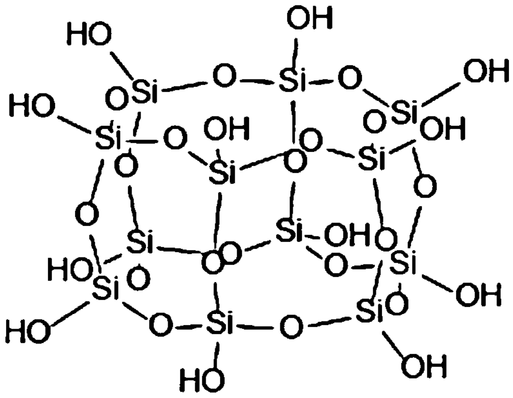

(1)

## Advantageous Effect of Invention

According to the present invention, a crystal in which an oligomer of $Si(OH)_4$ is regularly aligned can be provided.

## Brief Description of Drawings

[Figure 1] Figure 1 shows a diagram illustrating face 1 and face 2 in a schematic representation of an aligned structure viewed in a perspective direction.

[Figure 2] Figure 2 shows a schematic diagram showing a crystal structure determined from single crystal X-ray crystal structure analysis of the crystal (one-dimensional (rod-shaped) structure) produced in Example 1.

[Figure 3] Figure 3 shows a schematic diagram showing a crystal structure determined from single crystal X-ray crystal structure analysis of the crystal (two-dimensional (sheet-shaped) structure) produced in Example 2.

[Figure 4] Figure 4 shows a schematic diagram showing a crystal structure determined from single crystal X-ray crystal structure analysis of the crystal (three-dimensional (nanosponge-shaped) structure) produced in Example 3.

[Figure 5] Figure 5 shows a schematic diagram showing a crystal structure determined from single crystal X-ray crystal structure analysis of the crystal (three-dimensional (nanohoneycomb-shaped) structure) produced in Example 4.

[Figure 6] Figure 6 shows a schematic diagram showing a crystal structure determined from single crystal X-ray crystal structure analysis of the crystal (three-dimensional (nanohoneycomb-shaped) structure) produced in Example 5.

[Figure 7] Figure 7 shows a schematic diagram showing a crystal structure determined from single crystal X-ray crystal structure analysis of the crystal (three-dimensional (nanohoneycomb-shaped) structure) produced in Example 6.

[Figure 8] Figure 8 shows a schematic diagram showing a crystal structure determined from single crystal X-ray crystal structure analysis of the crystal (one-dimensional (rod-shaped) structure) produced in Example 19.

[Figure 9] Figure 9 shows a schematic diagram showing a crystal structure determined from single crystal X-ray crystal structure analysis of the crystal (two-dimensional (sheet-shaped) structure) produced in Example 20.

[Figure 10] Figure 10 shows a schematic diagram showing a crystal structure determined from single crystal X-ray crystal structure analysis of the crystal (three-dimensional (nanohoneycomb-shaped) structure) produced in Example 21.

[Figure 11] Figure 11 shows a schematic diagram showing a crystal structure determined from single crystal X-ray crystal structure analysis of the crystal (three-dimensional (nanohoneycomb-shaped) structure) produced in Example 22.

## Description of Embodiments

Hereinafter, the mode for carrying out the present invention (hereinafter, also referred to as the "present embodiment") will be described in detail. However, the present invention is not limited to the present embodiment, and various modifications can be made without departing from the gist thereof.

[Crystal]

The crystal of the present embodiment includes a silanol compound of an orthosilicic acid dodecamer represented by the following formula (1) (hereinafter, simply referred to as a "dodecamer"). In addition, the number of compounds constituting the crystal of the present embodiment is plural. Further, the crystal of the present embodiment has an interaction via a hydrogen bond by at least one hydroxy group between the silanol compounds.

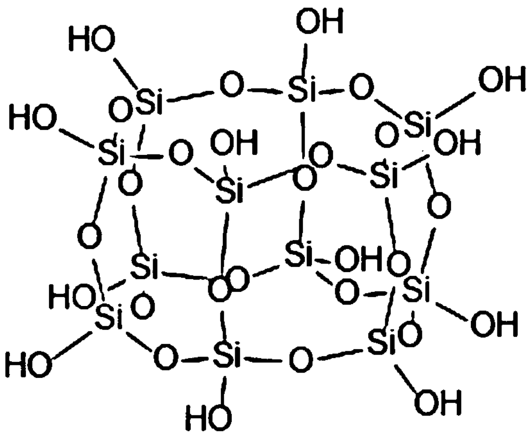

(1)

A plurality of silanol compounds contained in the crystal of the present embodiment interact with each other via a hydrogen bond by at least one hydroxy group in the silanol compound.

The interaction via a hydrogen bond in the present embodiment refers to a non-covalent interaction formed by the hydrogen atom of a hydroxy group contained in any silanol compound molecule in the crystal with an unshared electron pair of an oxygen atom in another silanol compound molecule. The interaction via a hydrogen bond is preferably formed between hydrogen and oxygen in hydroxy groups of silanol compounds.

The crystal as used herein is solid and includes an assemblage in which silanol compounds are regularly aligned by an interaction via a hydrogen bond. In the above assemblage, the silanol compounds may be aligned to form a chain or form a ring.

It can be confirmed by carrying out X-ray crystal structure analysis of the crystal that the crystal includes an interaction via a hydrogen bond between silanol compounds.

The crystal of the present embodiment includes a plurality of silanol compounds of the above dodecamer. In the crystal of the present embodiment, the hydroxy group forming a hydrogen bond in the silanol compound is arbitrary. That is, the hydroxy group forming a hydrogen bond in the silanol compound may be any of 12 hydroxy groups of a dodecamer.

The number of hydroxy groups forming a hydrogen bond in the silanol compound may be one or more per molecule.

However, from the viewpoint of forming a crystal, when silanol compounds are aligned to form a chain assemblage, the number of hydroxy groups forming a hydrogen bond in the silanol compounds is 2 or more per molecule, except for the terminal silanol compounds.

In addition, when the silanol compounds are aligned to form a cyclic assemblage, the number of hydroxy groups forming a hydrogen bond in the silanol compounds is two or more per molecule.

When the crystal of the present embodiment contains a dodecamer silanol compound and the silanol compound forms a chain assemblage, the number of hydroxy groups forming a hydrogen bond may be any of 2, 3, 4, 5, 6, 7, 8, 9, 10, 11, and 12 per molecule except for the terminal silanol compounds of the chain assemblage. In addition, when the crystal of the present embodiment contains a dodecamer silanol compound and the silanol compound is aligned to form a cyclic assemblage, the number of hydroxy groups forming a hydrogen bond may be any of 2, 3, 4, 5, 6, 7, 8, 9, 10, 11, and 12 per molecule.

The dodecamer silanol compounds contained in the crystal of the present embodiment self-organize and are regularly aligned to form an assemblage. Hereinafter, the forms of dodecamer silanol compounds will be illustrated, but in

the present specification, in the structures of a dodecamer, by omitting one Si-O-Si bond and expressing it as one side and omitting the OH group as follows, the structures of formula (1) may also be abbreviated as (1)' follows.

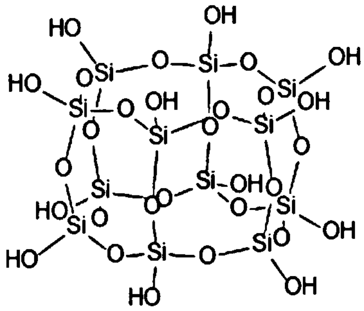

(1)

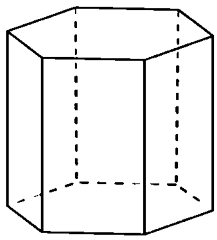

(1)'

The dodecamer silanol compound included in the crystal of the present embodiment has, as shown in the above structure, an evident vacancy in the middle of the hexagonal prism.

The form of alignment is not particularly limited, and examples thereof include a one-dimensional structure in which silanol compounds are linearly aligned.

The one-dimensional structures of a dodecamer are not particularly limited, and examples thereof include the structures shown in the following Table 1-1, Table 1-2, Table 2, and Table 3. The structures shown in these tables are intended to schematically represent the alignment of silanol compounds constituting the one-dimensional structure by indicating the arrangement of the silanol compounds and/or the orientation of the face of the cyclic silanol in the silanol compounds, and the one-dimensional structure in the present embodiment also allows the silanol compound to deviate from these schematically represented alignments and/or the face of the cyclic silanol to deviate from the axis of alignment.

In the structures shown in the following Table 1-1, Table 1-2, Table 2, and Table 3, the mode of a hydrogen bond is arbitrary as long as the hydrogen bond is formed in such a way as to allow for the alignments. Therefore, in the structures shown in the following Table 1-1, Table 1-2, Table 2, and Table 3, a hydrogen bond is omitted. As used herein, the mode of the hydrogen bond refers to the number and position of a hydrogen bond formed between silanol compounds. In addition, the number of aligned silanol compounds is, of course, not limited to the numbers shown in each table.

For example, in form 4 of Table 1-2, for example, the mode of the hydrogen bond may be the forms of the hydrogen bond shown in the following structures A and B, and even in one form, the number and position of the hydrogen bond formed is arbitrary.

A

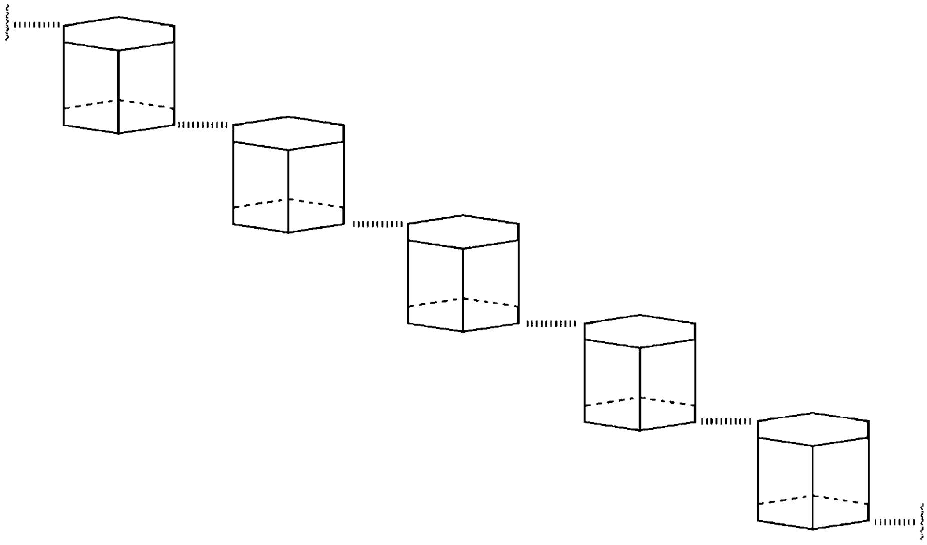

B

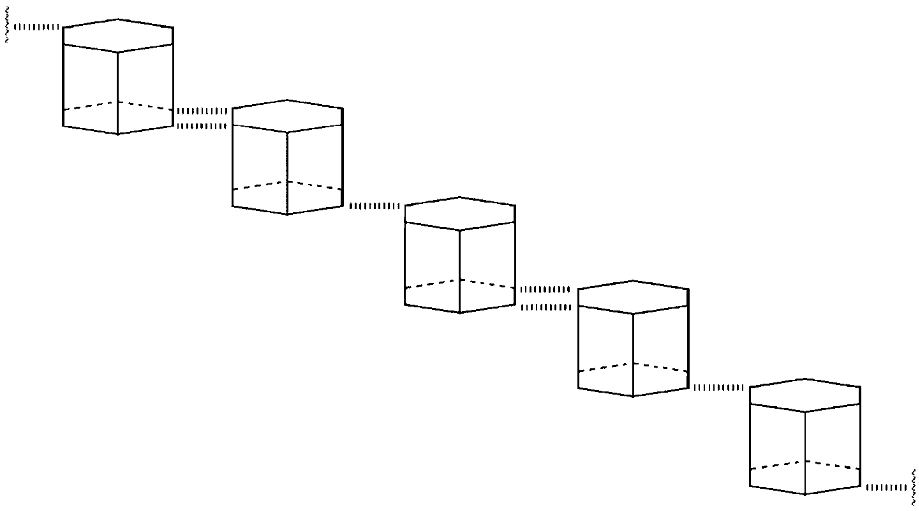

As used herein,

the bond between silanol compounds represented by

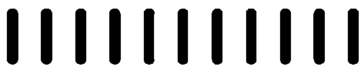

refers to omission of a bond including at least the following hydrogen bond:

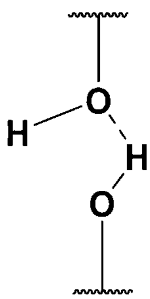

and in the following tables, the bond is omitted. This bond may include, in addition to the above hydrogen bond, hydrogen bonds by an interaction with a hydroxy group of yet another silanol compound and/or an interaction with a substance such as an organic compound, a transition metal complex, an inorganic substance, and an elemental substance, or may be a bond via a compound (e.g., $H_2O$) having two or more hydrogen binding functional groups between the dashed lines of the above bonds.

However, in the above structures A and B, the bond refers to a single hydrogen bond.

In addition, in the tables, face 1 refers to an alignment structure when the alignment structure viewed in a perspective direction is viewed in direction 1 (on the paper, from the top) in Figure 1, and face 2 refers to an alignment structure when the alignment structure viewed in a perspective direction is viewed in direction 2 (on the paper, from the front) in Figure 1.

[Table 1-1]

| Form | Alignment form | |
|---|---|---|
| 1 | Perspective | 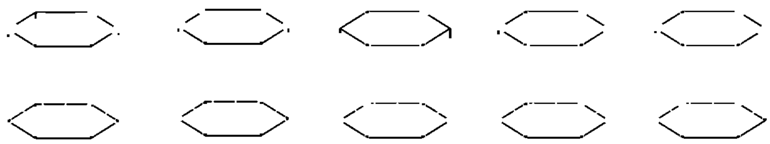 |
| | Face 1 | 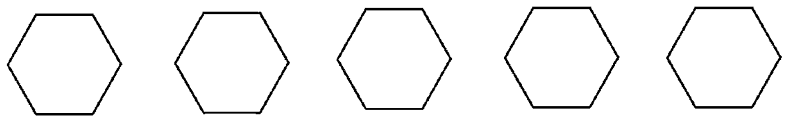 |
| | Face 2 | 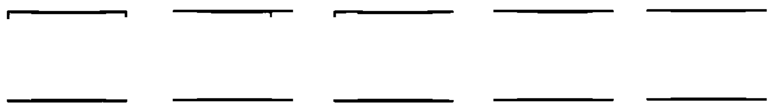 |
| 2 | Perspective | 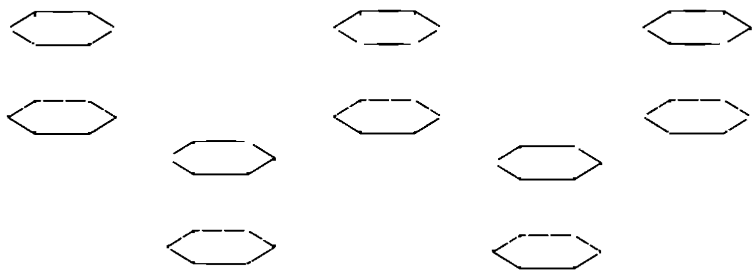 |
| | Face 1 | 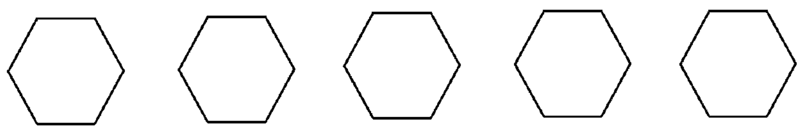 |
| | Face 2 | 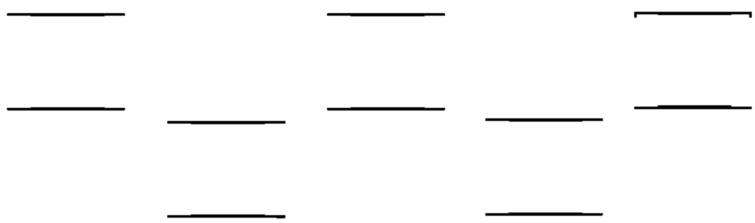 |

(continued)

| Form | Alignment form | |
|---|---|---|
| 3 | Perspective | 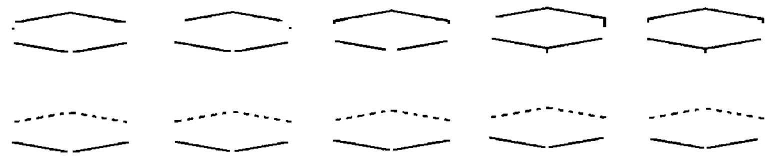 |
| | Face 1 | 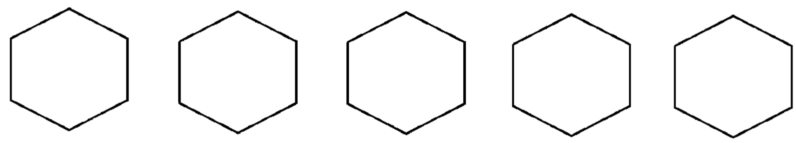 |
| | Face 2 | 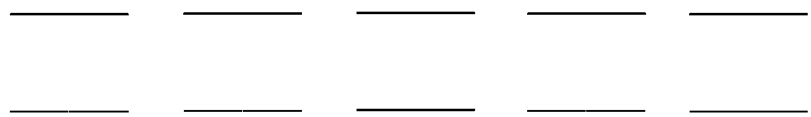 |

[Table 1-2]

| For m | Alignment form | |
|---|---|---|
| 4 | Perspectiv e | 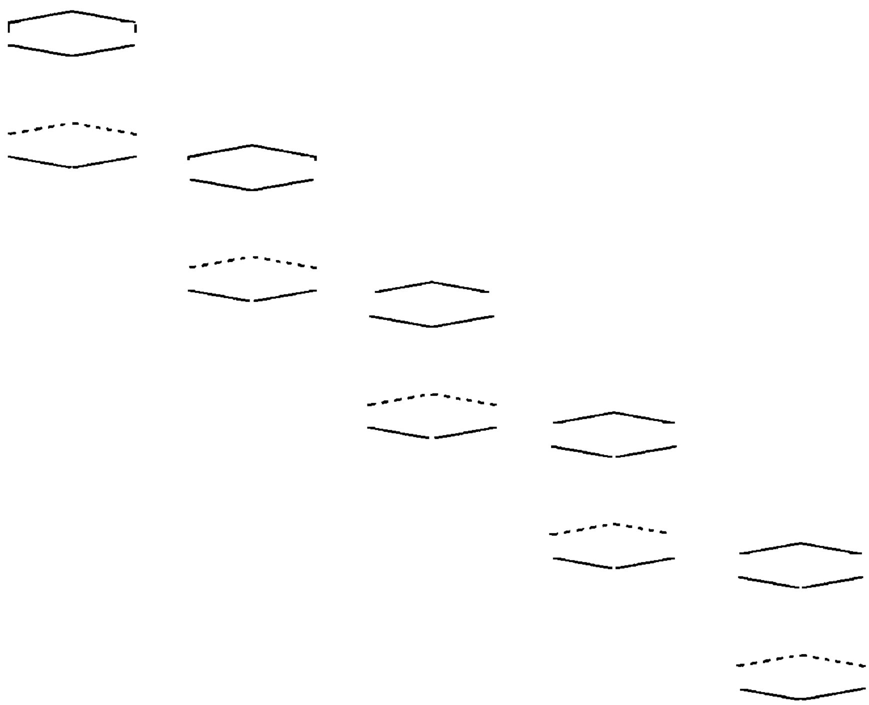 |
| | Face 1 | 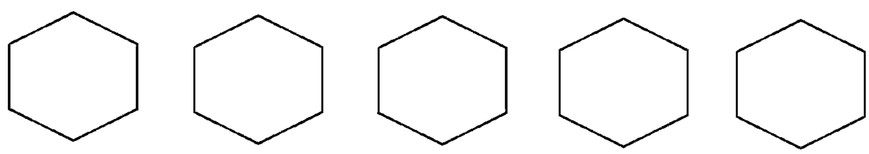 |

(continued)

| For m | Alignment form | |
|---|---|---|
| | Face 2 | 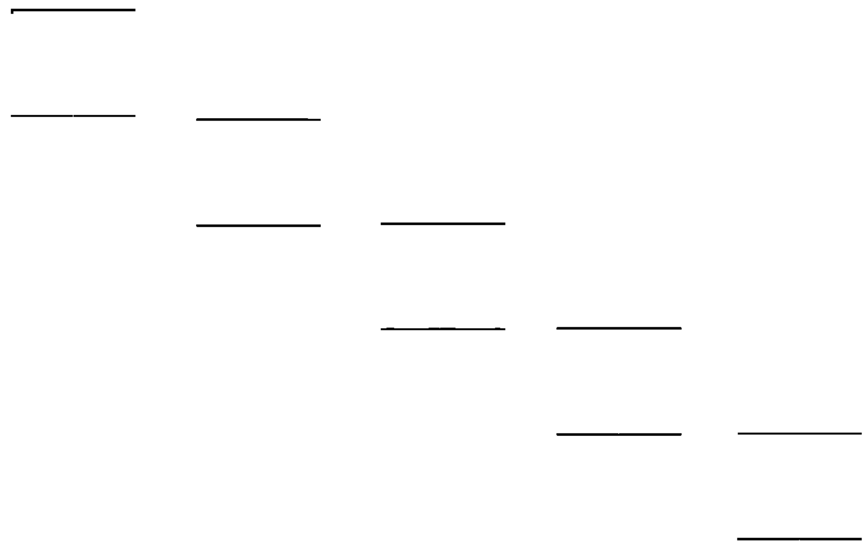 |

[Table 2]

| Form | Perspective | Face 1 | Face 2 |
|---|---|---|---|
| 5 | Change in width X is allowed depending on the mode of hydrogen bond formation, as in 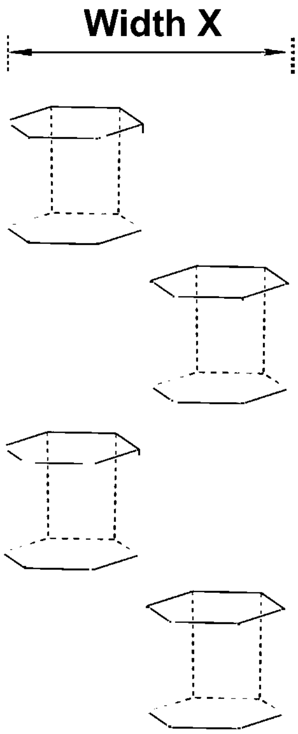  and the like. | Overlapping of cyclohexasiloxane skeletons is allowed depending on the mode of hydrogen bond formation, as in 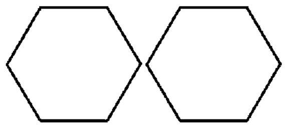 and 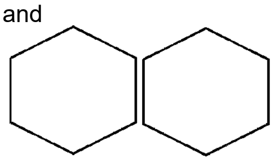 and the like. | Change in width X is allowed depending on the mode of hydrogen bond formation, as in 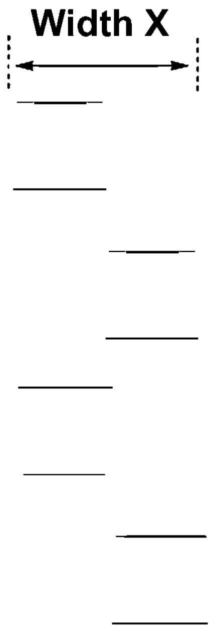  and the like. |

(continued)

| Form | Perspective | Face 1 | Face 2 |
|---|---|---|---|
| 6 | 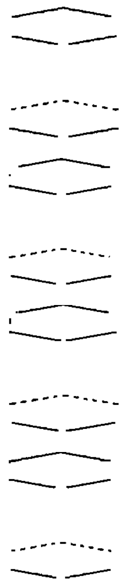 | 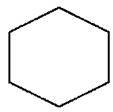 | 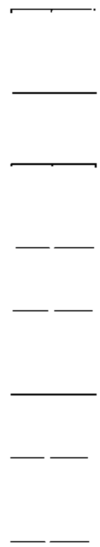 |

As described above, the crystal of the present embodiment may contain an assemblage in which silanol compounds are aligned to form a ring. At this time, the number of silanol compounds in forming a cyclic assemblage is arbitrary, and in the dodecamer silanol compounds, for example, 6 assemblages (form 7) can each form a ring. In addition, the crystal of the present embodiment may have a stacked structure in which one-dimensional structures of cyclic assemblages such as form 7 are stacked on top of each other via face 1.

[Table 3]

| Form | Perspective | Face 1 |
|---|---|---|
| 7 | 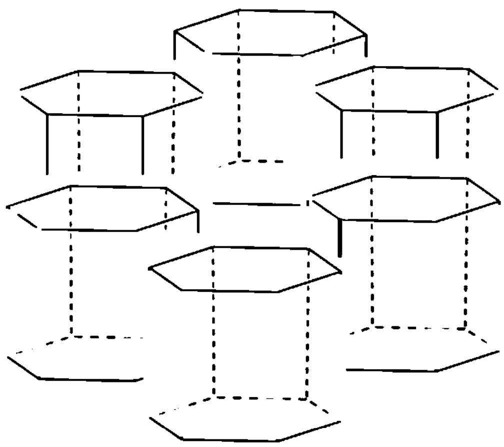 | 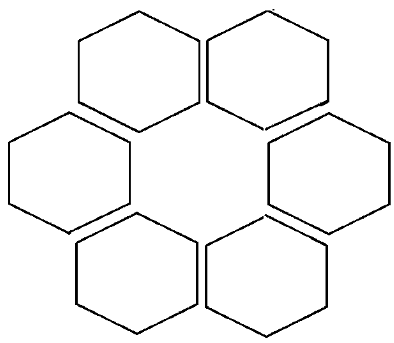 |

Hereinafter, the mode of the hydrogen bond will be described by taking the alignment forms shown in the above table as an example.

Examples of the mode of a hydrogen bond for forming the above linearly aligned one-dimensional structure include a mode in which the one-dimensional structure is formed by interactions by hydrogen bonds between two hydroxy groups contained in one silanol compound and hydroxy groups of different silanol compounds, respectively, via faces of tetramers and the two hydroxy groups forming a hydrogen bond may be two hydroxy groups on adjacent silicon atoms in one silanol compound, or may be two hydroxy groups on silicon atoms separated by one or more siloxane bonds (-O-Si-O- bonds). Here, the "adjacent silicon atom" means a silicon atom located with respect to a certain silicon atom with one oxygen atom sandwiched therebetween, and the "silicon atom separated by one or more siloxane bonds" means a silicon atom located with respect to a certain silicon atom with two or more oxygen atoms and one or more silicon atoms

sandwiched therebetween. In other words, the "adjacent silicon atom" means a silicon atom located with respect to a certain silicon atom with a structure represented by the following formula (a) in which n is 0 sandwiched therebetween, and the "silicon atom separated by one or more siloxane bonds" means a silicon atom located with respect to a certain silicon atom with a structure represented by the following formula (a) in which n is an integer of 1 or more sandwiched therebetween.

$$O\text{-}(Si\text{-}O)_n \ldots \qquad (a)$$

wherein n represents an integer of 0 or more.

Examples of a one-dimensional structure when the above assemblage is formed by a hydrogen bond between two hydroxy groups on silicon atoms separated by one or more siloxane bonds include, as shown in form 1, a one-dimensional structure formed by causing a hydroxy group on an upper silicon atom of a certain dodecamer to form a hydrogen bond with a hydroxy group on an upper silicon atom of another dodecamer, causing a hydroxy group on an upper silicon atom separated by one siloxane bond (located with the structure represented by the above formula (a) in which n is 1 sandwiched) from the upper silicon atom of the certain dodecamer to form a hydrogen bond with a hydroxy group on an upper silicon atom of yet another dodecamer, and repeating these (see the following structure).

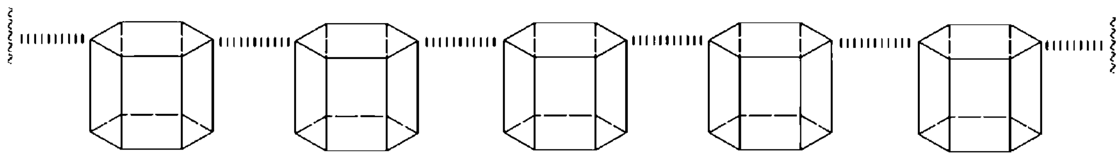

In addition thereto, examples of a one-dimensional structure when the above assemblage is formed by a hydrogen bond between two hydroxy groups on adjacent silicon atoms include, as shown in form 2, a one-dimensional structure formed by causing a hydroxy group on an upper silicon atom of a certain dodecamer to form a hydrogen bond with a hydroxy group on a lower silicon atom of another dodecamer, causing a hydroxy group on an upper silicon atom adjacent to the upper silicon atom of the certain dodecamer to form a hydrogen bond with a hydroxy group on a lower silicon atom of yet another dodecamer, and repeating these (see the following structure).

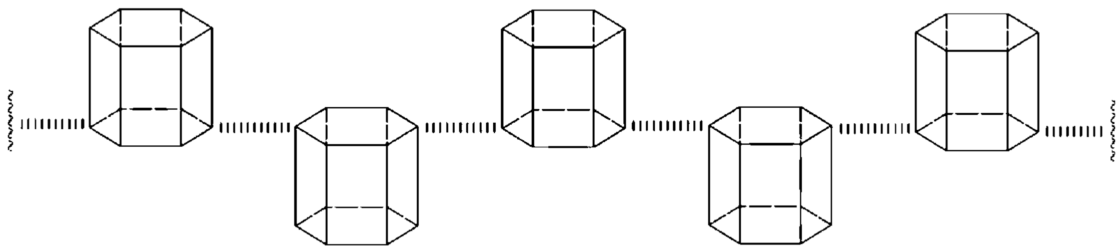

Examples of the linearly aligned one-dimensional structure also include an assemblage which is formed by interactions by hydrogen bonds between four hydroxy groups contained in one silanol compound and hydroxy groups of another silanol compound.

Specific examples of the one-dimensional structure include a structure in which two hydroxy groups, bonded to adjacent silicon, of four hydroxy groups contained in one silanol compound are hydrogen-bonded to two hydroxy groups, respectively, bonded to adjacent silicon atoms of another silanol compound, the remaining two hydroxy groups contained in the one silanol compound, which are bonded to the adjacent silicon atoms, are hydrogen-bonded to two hydroxy groups, respectively, which are bonded to adjacent silicon atoms, of yet another silanol compound, and include forms 1, 2, and 3 in the above Table 1-1.

Examples of the one-dimensional structure include structures in which faces of cyclic silanol are aligned in such a way as to overlap each other, as shown in forms 3 and 6.

Specific examples of the one-dimensional structure include a structure in which a face of cyclic silanol contained in one silanol compound and a face of cyclic silanol of another silanol compound interact with each other via a hydrogen bond (hereinafter, also referred to as a rod-shaped structure), for example, the following structure i, but are not limited thereto. The face of the cyclic silanol is preferably a face of a 12-membered ring (hexamer (cyclohexasiloxane skeleton)) when the silanol compound is a dodecamer represented by formula (1).

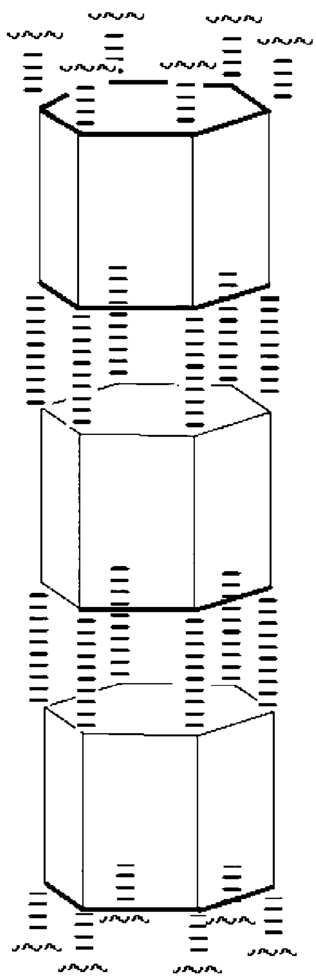

Structure i

The above structure i is aligned in such a way that the faces overlap each other, to be rod-shaped. In the above structure i, faces may be aligned in such a way that the faces overlap each other, to form a hydrogen bond network, and it is not necessary for all hydroxy groups to form hydrogen bonds.

Examples of the rod-shaped structure also include a structure in which in the alignment of dodecamer silanol compounds, faces of the 8-membered ring (tetramer (cyclotetrasiloxane skeleton)) of the dodecamer interact with each other via hydrogen bonds. Specific examples thereof include the alignment forms shown in form 3. In the alignment forms shown in form 3, faces may be aligned in such a way that the faces overlap each other, to form a hydrogen bond network, and it is not necessary for all hydroxy groups to form hydrogen bonds.

In the one-dimensional structure described above, the number of a hydrogen bond formed between each hydroxy group bonded to one silicon atom contained in one silanol compound and a hydroxy group of another silanol compound is 1. On the other hand, the number of hydrogen bonds that can be formed by the above hydroxy group may be 2 or more, and it is possible to form a hydrogen bond with a hydroxy group of yet another silanol compound. By forming a hydrogen bond with a hydroxy group of yet another silanol compound, the crystal has a two-dimensionally or three-dimensionally aligned structure.

That is, the crystal of the present embodiment may also be a crystal having a two-dimensional structure in which silanol compounds are planarly aligned by an interaction via a hydrogen bond, and a crystal having a three-dimensional structure in which silanol compounds are sterically aligned by an interaction via a hydrogen bond.

In the crystal having a two-dimensional structure according to the present embodiment, the bond form of the hydrogen bond is not particularly limited as long as the structure is a structure in which silanol compounds are planarly aligned. Here, the planarly aligned structure as used herein can also be referred to as a structure in which a plurality of silanol compounds are regularly aligned in two directions, the X-axis direction and the Y-axis direction.

Examples of the crystal having a two-dimensional structure according to the present embodiment include a structure in which the one-dimensional structure described above interacts with yet another one-dimensional structure via a hydrogen bond to be planarly aligned. In addition, the two-dimensional structure in the present embodiment also includes

a structure in which ends of the planarly aligned structures interact with each other by a hydrogen bond to form a ring.

Preferable examples of the structure of the crystal having a two-dimensional structure include a structure planarly formed by causing one side in the longitudinal direction in the one-dimensional structure of the above rod-shaped structure to interact with one side in the longitudinal direction in another one-dimensional structure via a hydrogen bond, and specifically, the structure is represented by the following structure ii, but is not limited thereto. Other specific examples of the crystal having a two-dimensional structure include, but are not particularly limited to, crystals represented by the following structure iii. In the following structures ii and iii, it is not necessary for all hydroxy groups to form hydrogen bonds.

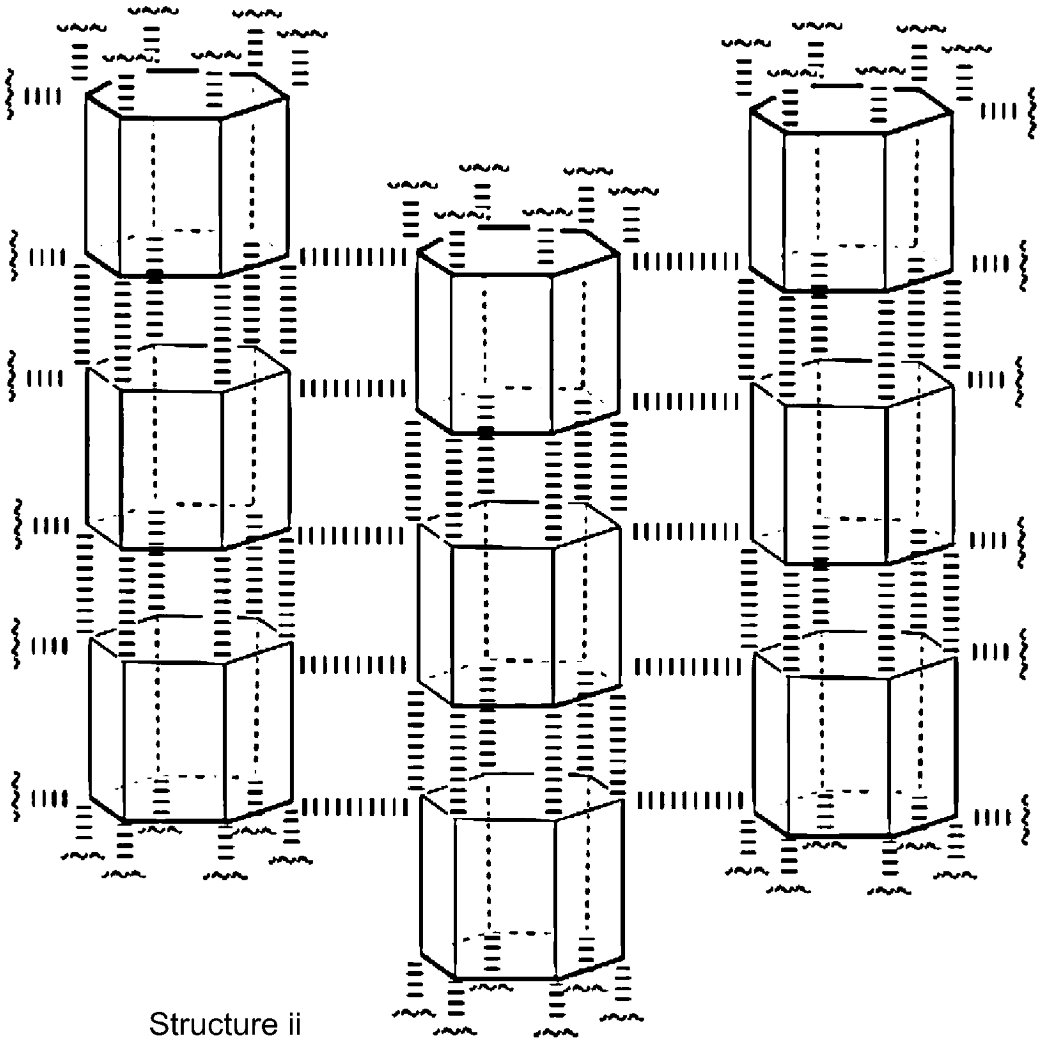

Structure ii

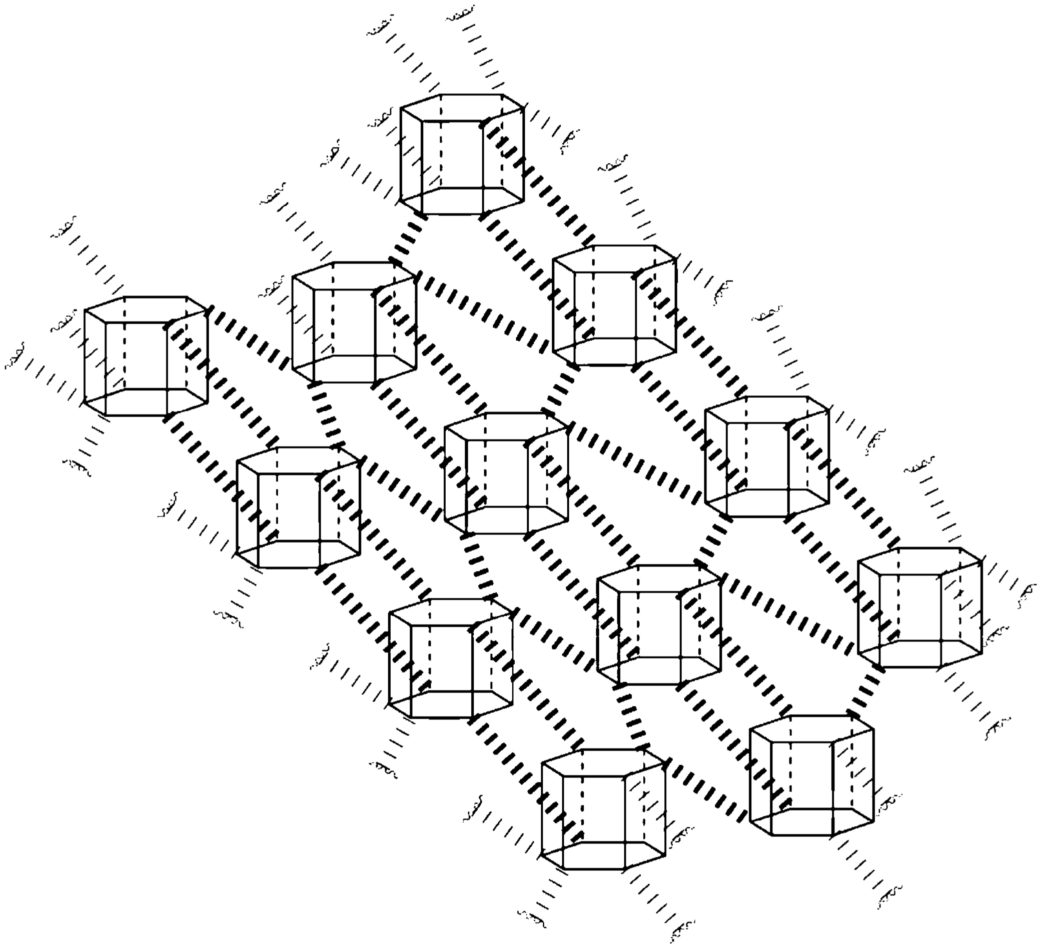

Structure iii

In the crystal having a three-dimensional structure according to the present embodiment, the bond form of the hydrogen bond is not particularly limited as long as the structure is a structure in which silanol compounds are sterically aligned. Here, the sterically aligned structure as used herein can also be referred to as a structure in which a plurality of silanol compounds are regularly aligned in three directions, the X-axis direction, the Y-axis direction, and Z-axis direction.

Examples of the crystal having a three-dimensional structure according to the present embodiment include a structure in which the two-dimensional structure described above interacts with yet another plurality of two-dimensional structures via a hydrogen bond to be sterically aligned. In addition, preferable examples of the structure of the crystal having a three-dimensional structure include the following structure iv to vii, but are not limited thereto.

Schematic diagram of three-dimensional (nanosponge-shaped) structure

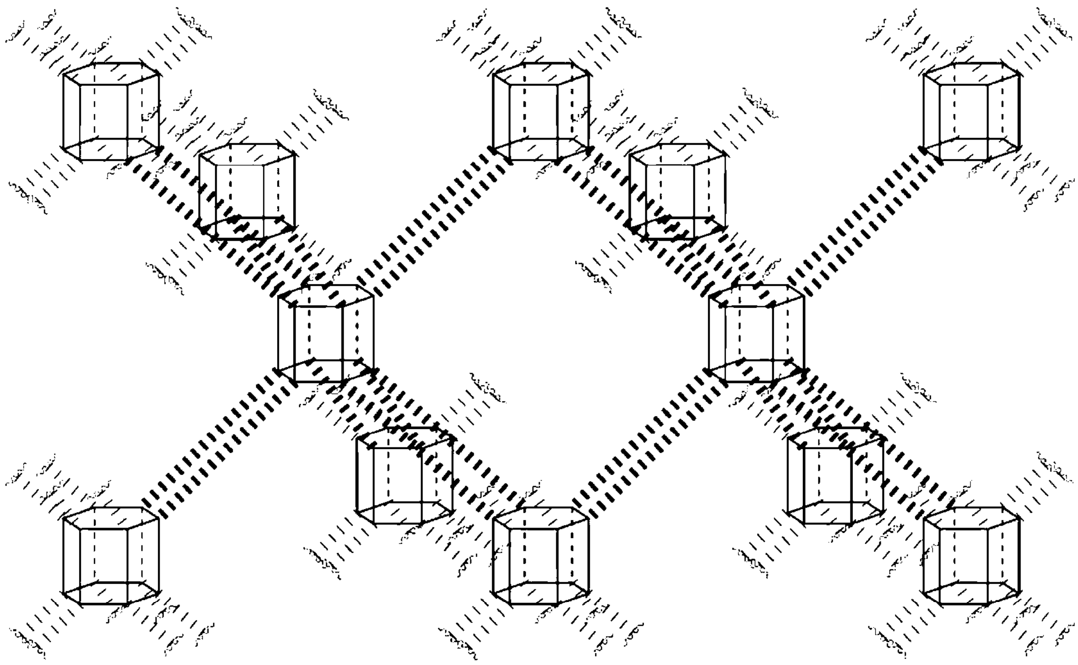

Structure iv

Schematic diagram of three-dimensional (nanohoneycomb-shaped) (type 1 (a structure of 12-membered ring (hexamer) faces)) structure

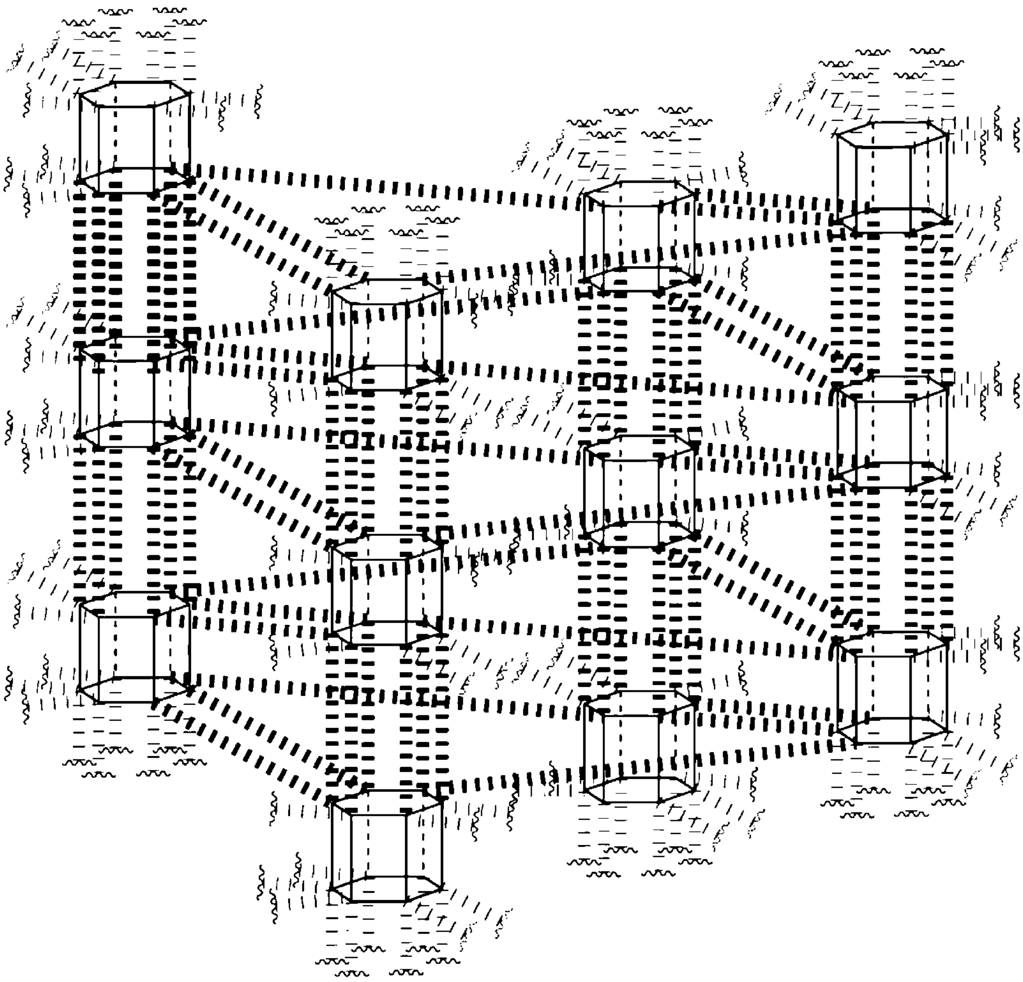

Structure v

Schematic diagram of three-dimensional (nanohoneycomb-shaped) (type 2 (a structure in which 8-membered ring (tetramer) faces deviated from each other by 1/2 every two molecules)) structure

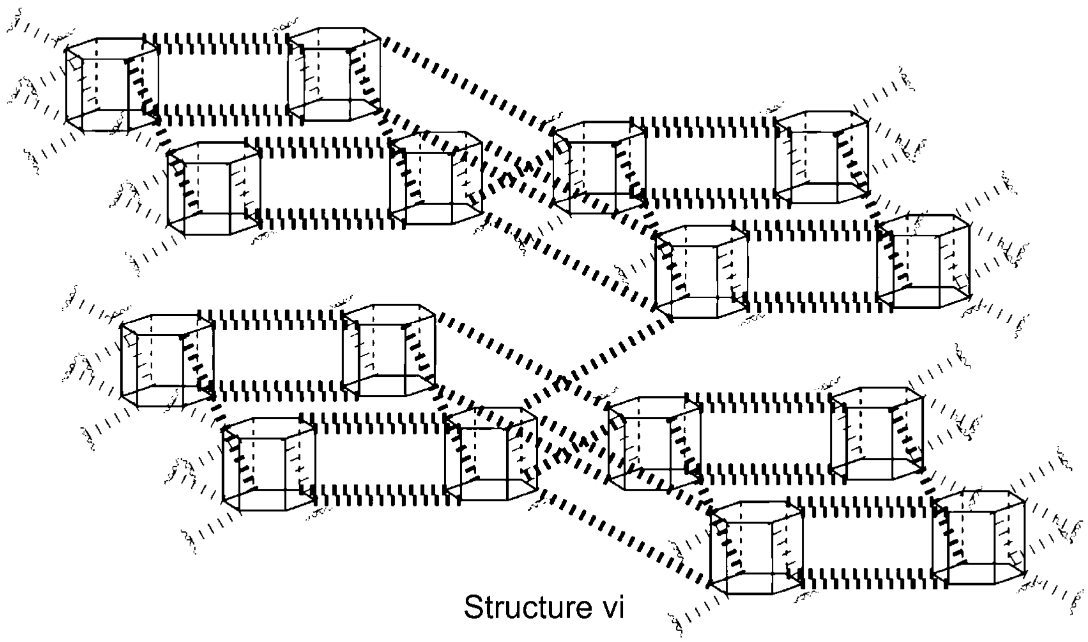

Structure vi

Schematic diagram of three-dimensional (nanohoneycomb-shaped) (type 2 (a structure in which 8-membered ring (tetramer) faces deviated from each other by 1/2 every two molecules)) structure (this structure differs in the presence or absence of some hydrogen bonds from the above structure vi)

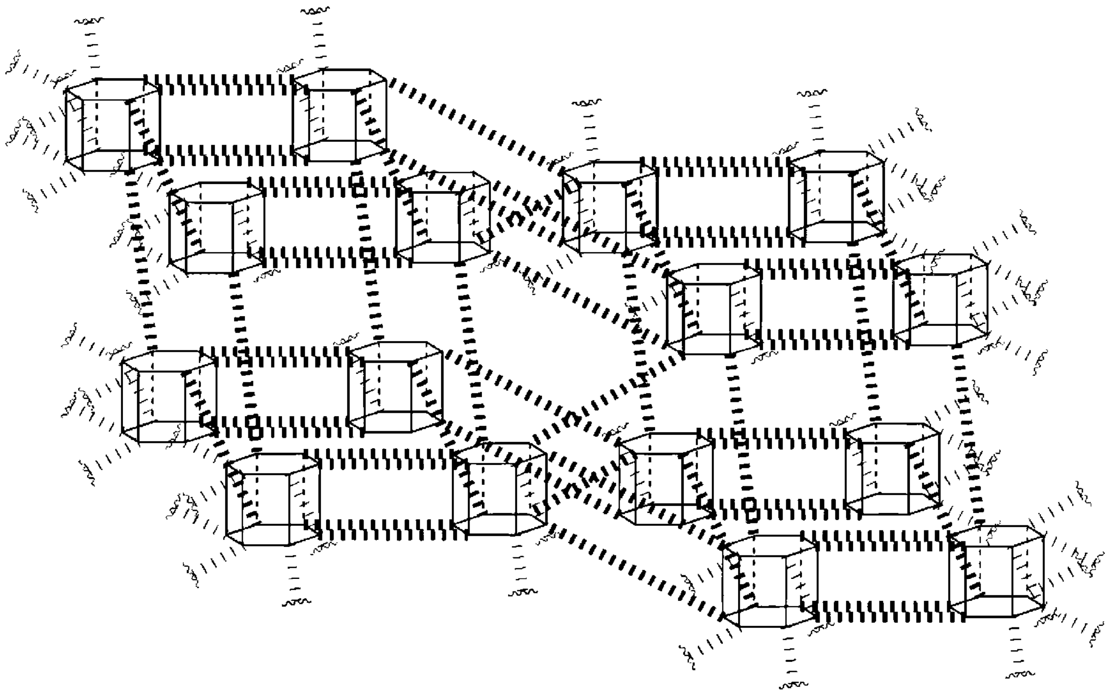

Schematic diagram of three-dimensional (nanohoneycomb-shaped) (type 3 (a structure of 8-membered ring (tetramer) faces)) structure

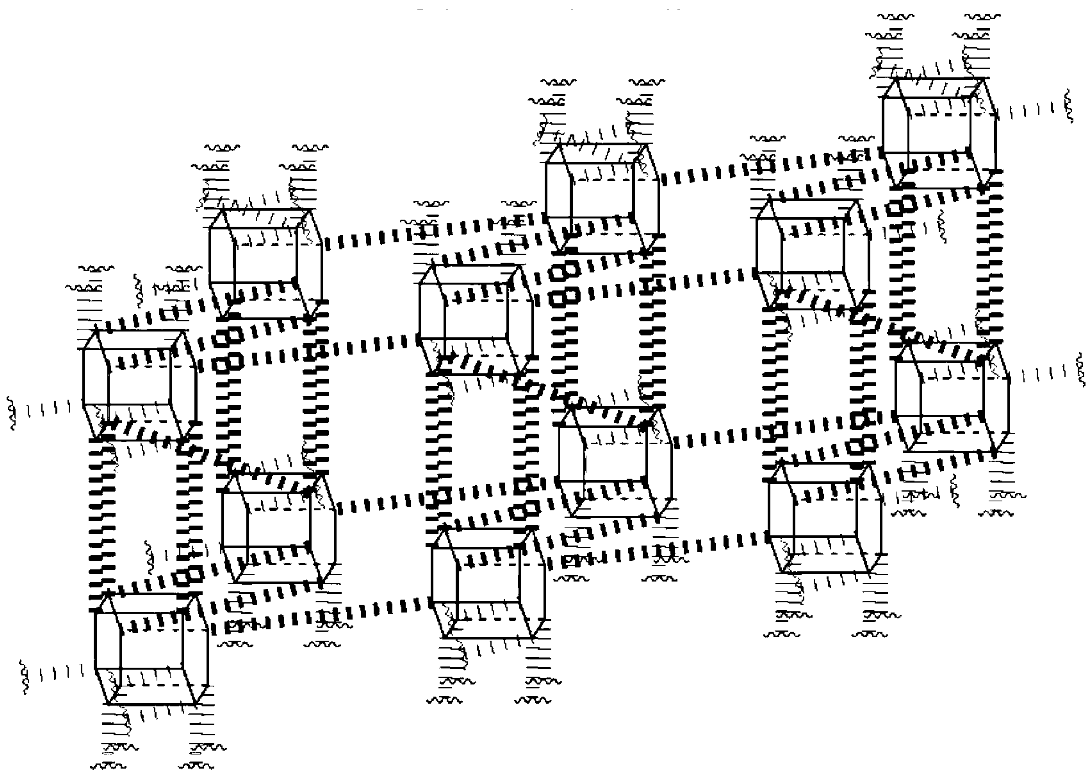

Structure vii

As will be described later, the crystal of the present embodiment can be prepared by recrystallization from a solution containing a silanol compound and, if necessary, an organic compound, and the obtained crystal may contain an organic compound. The substance contained in the crystal is not limited to the solvent used at the time of production and/or the organic compound added, and may be, for example, a transition metal complex, an inorganic substance, or an elemental substance.

The organic compound, transition metal complex, inorganic substance, and elemental substance may be included between assemblages in which silanol compounds are aligned by an interaction via a hydrogen bond, and when the crystal has a three-dimensional structure, they may be included in the three-dimensional structure.

The organic compound, transition metal complex, inorganic substance, and elemental substance, which are substances contained in the crystal, are not particularly limited, and the molecular weight thereof is preferably 2 to 1000 g/mol.

The substances contained in the crystal are not particularly limited, and examples thereof include hydrogen (hydrogen gas), nitrogen (nitrogen gas), helium, diethyl ether, diisopropyl ether, tert-butyl ethyl ether, furan, glycidyl methyl ether, allyl glycidyl ether, glycidyl isopropyl ether, glycidyl propargyl ether, butyl glycidyl ether, glycidyl phenyl ether, benzyl glycidyl ether, glycidyl acrylate, glycidyl methacrylate, 1,2-epoxybutane, 3,4-epoxy-1-butene, 1,2:3,4-diepoxybutane, 1,2:5,6-diepoxyhexane, 1,2:7,8-diepoxyoctane, tetramethylene glycol diglycidyl ether, 1,2-epoxycyclohexane, 1,2-epoxy-4-vinylcyclohexane, tetrahydrofuran (THF), tetrahydrothiophene, 1,3-dioxolane, ethylene carbonate, 1,4-dioxane, 1,3,5-trithiane, thiophene, selenophene, 2,5-dibromoselenophene, tellurophene, oxazole, isoxazole, isothiazole, pyrazole, imidazole, thiazole, 1H-1,2,3-triazole, 1,2,4-triazole, 1H-tetrazole, pyridine, pyrazine, triazine, benzoxazole, 1,2-benzoisoxazole, 2,1-benzoisoxazole, 1,2-benzoisothiazol-3(2H)-one, indole, benzoimidazole, 1,3-benzodioxol, benzothiazole, 2,1,3-benzothiadiazole, indazole, 1,2,3-benzotriazole, pyrazolo[3,4-b]pyridine, methyl acetate, ethyl acetate, methyl acrylate, methyl methacrylate, ethyl acrylate, ethyl methacrylate, allyl acrylate, allyl methacrylate, butyl acrylate, isobutyl acrylate, butyl methacrylate, isobutyl methacrylate, methacrylic acid 2-methoxyethyl, 1,4-phenylenediisocyanate, 1,4-phenylenediisothiocyanate, 1,5-diisocyanatonaphthalene, squaric acid (3,4-dihydroxy-3-cyclobutene-1,2-dione), cloconic acid (4,5-dihydroxy-4-cyclopentene-1,2,3-trione), dimethoxyethane, diethylene glycol dimethyl ether, triethylene glycol dimethyl ether, N,N-dimethylacetamide, N,N-dimethylformamide (DMF), N-methylacetamide, dimethylsulfoxide, dimethylurea, tetramethylurea, aniline, pyridine, pyrazine, 4-dimethylaminopyridine, quinoline, quinoxaline, 1,5-naphthyridine, acridine, phenazine, 1,4-anthrazoline, 1,5- anthrazoline, 1,6- anthrazoline, 1,10- phenanthroline, 2,2-bipyridyl, 3,3-bipyridyl, 4,4-bipyridyl, quinuclidine, 1,4-diazabicyclooctane, hexamethylenetetramine, cyclopentanone, cyclohexanone, 1,2-cyclohexanedione, 1,3-cyclohexanedione, 1,4-cyclohexanedione, 1,4-benzoquinone, tetrafluoro-1,4-benzoquinone, hydroquinone, 1,2-naphthoquinone, 1,4-naphthoquinone, 2-methyl-1,4-naphthoquinone, anthraquinone, 1,4-anthraquinone, benzene, toluene, xylene, 1,2-bis(bromomethyl)benzene, 1,4-dibromo-2,5-dimethylbenzene, 1,4-dibromo-2,5-bis(bromomethyl)benzene, 1,2-dibromo-4,5-dimethylbenzene, 1,4-dibromo-2,5-dimethylbenzene, 1,4-bis(dimethylsilyl)benzene, 1,4-bis(trimethylsilyl)benzene, 1,4-bis(hydroxydimethylsilyl)benzene, styrene, 4-methylstyrene, 2,3,4,5,6-pentafluorostyrene, naphthalene, 2,3-dimethylnaphthalene, 2,6-dimethylnaphthalene, 2,7-dimethylnaphthalene, 2,6-dibromonaphthalene, 2,7-dibromonaphthalene, benzo[b]thiophene, 5-bromobenzo[b]thiophene, 6-bromobenzo[b]thiophene, anthracene, naphthacene, pentacene, 2,3-dimethylanthracene, 2-bromoanthracene, 2,6-dibromoanthracene, carbazole, 2-bromocarbazole, 3-bromocarbazole, 2,7-dibromocarbazole, 3,6-dibromocarbazole, dibenzothiophene, 3-bromodibenzothiophene, 2,8-dibromodibenzothiophene, 3,7-dibromodibenzothiophene, 4,6-dibromodibenzothiophene, 2-iododibenzothiophene, 2,8-diiododibenzothiophene, 2,8-dimethyldibenzothiophene, benzo[1,2-b':4,5-b']dithiophene, 2,6-dibromobenzo[1,2-b':4,5-b']dithiophene, 2,8-dimethylanthra[2,3-b:6,7-b']dithiophene, phenanthro[1,2-b:8,7-b']dithiophene, thieno[3,2-b]thiophene, 3-bromothieno[3,2-b]thiophene, 2,5-dibromothieno[3,2-b]thiophene, 2,5-di(2-thienyl)thieno[3,2-b]thiophene, 3,6-dibromothieno[3,2-b]thiophene, thieno[2,3-b]thiophene, 2-bromothieno[2,3-b]thiophene, 2,5-**dibromothieno[2,3-b]thiophene,** 3,4-dibromothieno[2,3-b]thiophene, dithieno[3,2-b:2',3'-d]thiophene, 2,6-dibromodithieno[3,2-b:2',3'-d]thiophene, 3,5-dibromodithieno[3,2-b:2',3'-d]thiophene, biphenyl, p-terphenyl, 4-bromo-p-terphenyl, 4,4"-dibromo-p-terphenyl, 4-bromobiphenyl, 4,4'-dibromobiphenyl, p-quaterphenyl, 2,2'-bithiophene, 3,3'-dibromo-2,2'-bithiophene, 5,5'-dibromo-2,2'-bithiophene, 3,3',5,5'-dibromo-2,2'-bithiophene, 2,2'-bithiophene-5-carboxyaldehyde, 5-bromo-2,2'-bithiophene-5'-carboxyaldehyde, 2,2'-bithiophene-5,5'-dicarboxyaldehyde, terthiophene, 5,5"-dibromo-2,2':5',2"-terthiophene, 5"-bromo-2,2':5',2"-terthiophene-5-carboxyaldehyde, 2,2':5',2"-terthiophene-5,5"-dicarboxyaldehyde, α-quaterthiophene, α-quinquethiophene, α-sexithiophene, α-septithiophene, 1,4-cyclohexadiene, 1-methyl-1,4-cyclohexadiene, azobenzene, 3,3'-dimethylazobenzene, trans-stilbene, trans-4-bromostilbene, 4,4'-dibromo-trans-stilbene, 4-methyl-trans-stilbene, 4,4'-dimethyl-trans-stilbene, 1,4-diethynylbenzene, diphenylacetylene, 1-ethynyl-4-(phenylethynyl)benzene, adamantane, 1,3-dimethyladamantane, 1-bromoadamantane, 2-bromoadamantane, 3-bromoadamantane, 1,3-dibromoadamantane, pentane, hexane, heptane, octane, nonane, decane, undecane, dodecane, tridecane, tetradecane, pentadecane, hexadecane, heptadecane, octadecane, nonadecane, eicosane, heneicosane, docosane, tricosane, tetracosane, acetonitrile, adiponitrile, fumaronitrile, tetracyanoethylene, 1,1,3,3-tetramethyldisiloxane, hexamethyldisiloxane, 1,1,3,3,5,5-hexamethyltrisiloxane, 1,1,3,3,5,5,5-heptamethyltrisiloxane, 1,1,1,3,5,5,5-heptamethyltrisiloxane, 1,1,1,3,3,5,5,5-octamethyltrisiloxane, 1,1,1,3,5,7,7,7-octamethyltetrasiloxane, 1,1,3,3,5,5,7,7-octamethyltetra Siloxane, decamethyltetrasiloxane, 1,1,3,3,5,5,7,7,9,9-decamethylpentasiloxane, 1,1,3,3,5,5,7,7,9,9,11,11-dodecamethylhexasiloxane, ferrocene, nickelocene, ruthenocene, chromocene, manganocene, cobaltocene, osmocene, vanadocene, acetylacetonatobis(ethylene) rhodium, (2,4-pentanedionato)lithium, bis(2,4-pentanedionato)beryllium, bis(2,4-pentanedionato)magnesium, bis(2,4-pentanedionato)calcium, bis(2,4-pentanedionato)manganese, bis(2,4-pentanedionato)cobalt, bis(2,4-pentanedionato) nickel, bis(2,4-pentanedionato)copper, bis(2,4-pentanedionato)palladium, bis(2,4-pentandionato)platinum, tris(2,4-pentandionato)chromium, tris(2,4-pentandionato)cobalt, tris(2,4-pentandionato)gallium, tris(2,4-pentandionato)indium, tris(2,4-pentanedionato)iridium, tris(2,4-pentanedionato)iron, tris(2,4-pentanedionato)lanthanum, bis(benzene)chromium, (benzene)tricarbonylchromium, cyclopentadienyldicarbonylcobalt, tris(cyclopentadienyl)gadolinium, tris(cyclopentadienyl)yttrium, cyclopentadienylindium, bis(cyclopentadienyl)magnesium, cyclopentadienylmanganese tricarbonyl, cycloheptatrienemolybdenum tricarbonyl, tris(cyclopentadienyl)neodymium, allylpalladium chloride (dimer), bis(cyclooctatetraene)iron, cyclohexadiene iron tricarbonyl, dicarbonylcyclopentadienyliodoiron, cyclopentadienyliron dicarbonyl (dimer), tricarbonyl(cyclooctatetraene)iron, iron(II) acetate, (acetylacetonato)(1,5-cyclooctadiene)iridium, chloro(1,5-cyclooctadiene)iridium (dimer), chlorobis(ethylene)iridium (dimer), (cycloheptatrienyl)(cyclopentadienyl)titanium, bis(1,5-cyclooctadiene)nickel, bis(1,5-cyclooctadiene)platinum, (trimethyl)cyclopentadienylplatinum, tris(cyclopentadienyl)praseodymium, cyclopentadienylrhenium tricarbonyl, dicarbonyl(2,4-pentanedionato)rhodium, hydroxy(1,5-cyclooctadiene)rhodium (dimer), acetylacetonato(norbornadiene)rhodium, chloro(1,5-cyclooctadiene)rhodium (dimer), rhodium acetate (dimer), chloro(norbornadiene)rhodium (dimer), dicarbonylcyclopentadienylruthenium (dimer), tris(cyclopentadienyl)samarium, cyclopentadienylthallium, dicarbonylbis(cyclo)pentadienyl)titanium, cyclopentadienylvanadium tetracarbonyl, bromine, iodine, sulfur, mercury, and water.

When the crystal of the present embodiment contains an organic compound, a transition metal complex, an inorganic substance, or an elemental substance, as described later, it may be added to a solution containing a silanol compound used for recrystallization, or the organic compound, transition metal complex, inorganic substance, or elemental substance may be added to the obtained crystal.

When the crystal of the present embodiment contains, for example, benzene, the benzene molecules can be included, for example, inside the above structure v (nanohoneycomb-shaped (type 1) (a structure of 12-membered ring (hexamer) faces)).

[Method of producing crystal]

The crystal of the present embodiment can be produced, for example, by preparing a solution containing a

dodecamer silanol compound, and if necessary, further adding at least one substance selected from the group consisting of an organic compound, a transition metal complex, an inorganic substance, and an elemental substance to the solution, and carrying out recrystallization by a vapor diffusion process applied to the solution, or further adding, if necessary, at least one substance selected from the group consisting of an organic compound, a transition metal complex, an inorganic substance, and an elemental substance to the solution, and carrying out recrystallization by a poor solvent process applied to the solution, or further adding, if necessary, at least one substance selected from the group consisting of an organic compound, a transition metal complex, an inorganic substance, and an elemental substance to the solution, and carrying out recrystallization by concentrating the solution under reduced pressure, or further adding, if necessary, at least one substance selected from the group consisting of an organic compound, a transition metal complex, an inorganic substance, and an elemental substance to the solution, and carrying out recrystallization by cooling the solution, or further adding, if necessary, at least one substance selected from the group consisting of an organic compound, a transition metal complex, an inorganic substance, and an elemental substance to the solution, and carrying out recrystallization by heating the solution.

That is, one method of producing the crystal of the present embodiment is a method comprising: a step of preparing a solution containing the above silanol compound; and a step of further adding, if necessary, at least one substance selected from the group consisting of an organic compound, a transition metal complex, an inorganic substance, and an elemental substance to the solution and carrying out recrystallization by a vapor diffusion process applied to the solution. Here, the vapor diffusion process refers to, for example, a process of adding a poor solvent to the solution by vapor diffusion. In addition, one method of producing the crystal of the present embodiment is a method comprising: a step of preparing a solution containing the above silanol compound; and a step of further adding, if necessary, at least one substance selected from the group consisting of an organic compound, a transition metal complex, an inorganic substance, and an elemental substance to the solution and carrying out recrystallization by a poor solvent process applied to the solution. Here, the poor solvent process refers to, for example, a process of adding a poor solvent at once to the solution. In addition, one method of producing the crystal of the present embodiment is a method comprising: a step of preparing a solution containing the above silanol compound; and a step of further adding, if necessary, at least one substance selected from the group consisting of an organic compound, a transition metal complex, an inorganic substance, and an elemental substance to the solution and carrying out recrystallization by concentrating of the solution under reduced pressure. Further, one method of producing the crystal of the present embodiment is a method comprising: a step of preparing a solution containing the above silanol compound; and a step of further adding, if necessary, at least one substance selected from the group consisting of an organic compound, a transition metal complex, an inorganic substance, and an elemental substance to the solution and carrying out recrystallization by cooling the solution. Here, cooling refers to lowering the temperature (e.g., lowering the temperature to room temperature) by heating the solution once and allowing the solution to stand or the like, or cooling the solution to, for example, -80°C to 25°C, and preferably -30°C to 25°C. The temperature in heating the solution once is preferably, for example, 30 to 180°C. Further, one method of producing the crystal of the present embodiment is a method comprising: a step of preparing a solution containing the above silanol compound; and a step of further adding, if necessary, at least one substance selected from the group consisting of an organic compound, a transition metal complex, an inorganic substance, and an elemental substance to the solution and carrying out recrystallization by heating the solution. Here, the temperature in heating is, for example, 30 to 180°C, and preferably 60 to 120°C, and the heating time is preferably, for example, 0.5 to 24 hours. Heating under such conditions tends to deposit a crystal having the most stable crystal structure (type 1). After this heating, cooling is carried out, and then, the crystal can be recovered.

These methods can also be carried out in combination.

In the above production method, by distilling off the solvent from the solution containing the silanol compound, or by cooling the solution, or by heating the solution, an interaction by a hydrogen bond can be generated between the silanol compounds.

One aspect of the present embodiment is a method of self-organizing a silanol compound, the method comprising:

a step of forming an interaction by a hydrogen bond by a vapor diffusion process applied to a solution containing the dodecamer silanol compound, or by a poor solvent process applied to the solution, or by concentrating the solution under reduced pressure, or by cooling the solution, for example, by cooling the solution and distilling off the solvent, or by heating the solution.

When the crystal of the present embodiment contains an organic compound, a transition metal complex, an inorganic substance, or an elemental substance, the crystal of the present embodiment may be produced by a method involving further impregnating the crystal obtained by recrystallization as described above with a substance selected from the group consisting of an organic compound, a transition metal complex, an inorganic substance, and an elemental substance or a solution thereof. By this method, crystals containing various organic compounds, transition metal complexes, inorganic substances, and elemental substances can be obtained using the crystal obtained by the above recrystallization as a starting material.

The crystal to be impregnated is not particularly limited as long as the crystal is the crystal of the present embodiment, and specifically, the crystal may be any of: a crystal having a one-dimensional structure in which the silanol compounds are linearly aligned by the interaction via a hydrogen bond; a crystal having a two-dimensional structure in which the silanol compounds are planarly aligned by the interaction via a hydrogen bond; and a crystal having a three-dimensional structure in which the silanol compounds are sterically aligned by the interaction via a hydrogen bond.

In the present specification, a crystal containing a substance as a raw material is represented by a crystal (S), and a crystal containing a substance with which at least a part of the substance contained in the crystal (S) is replaced is represented by a crystal (P).

By the above impregnation method, the substance in the crystal (S) is replaced with a substance with which it is impregnated, to form the crystal (P). It is considered that this replacement takes place because while the crystal (S) originally has a crystal structure formed by a first substance of an organic compound, a transition metal complex, an inorganic substance, or an elemental substance, and a silanol compound, for reasons such as excessive presence of a second substance of an organic compound, a transition metal complex, an inorganic substance, or an elemental substance there and the higher affinity for the silanol compound, the formation of a crystal structure with the second substance takes precedence.

One aspect of the present embodiment is a method of producing a crystal (P) comprising at least one substance selected from the group consisting of an organic compound, a transition metal complex, an inorganic substance, and an elemental substance.

The method of producing a crystal (P) comprises:

a step of preparing a crystal (S) comprising a plurality of dodecamer silanol compounds represented by the following formula (1), having an interaction via a hydrogen bond by at least one hydroxy group between the silanol compounds, and comprising at least one first substance selected from the group consisting of an organic compound, a transition metal complex, an inorganic substance, and an elemental substance; and

a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

Here, at least a part of the substance after the replacement is preferably a substance different from the substance before the replacement.

That is, one aspect of the present embodiment is a method of producing a crystal (P) comprising a plurality of dodecamer silanol compounds represented by formula (1), having an interaction via a hydrogen bond by at least one hydroxy group between the silanol compounds, having a one-dimensional structure in which the silanol compounds are linearly aligned, and comprising at least one substance selected from the group consisting of an organic compound, a transition metal complex, an inorganic substance, and an elemental substance, the method comprising:

a step of preparing a crystal (S) comprising a plurality of dodecamer silanol compounds represented by the formula (1), having an interaction via a hydrogen bond by at least one hydroxy group between the silanol compounds, having a one-dimensional structure in which the silanol compounds are linearly aligned, and comprising at least one first substance selected from the group consisting of an organic compound, a transition metal complex, an inorganic substance, and an elemental substance; and

a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

In addition, one aspect of the present embodiment is a method of producing a crystal (P) comprising a plurality of dodecamer silanol compounds represented by formula (1), having an interaction via a hydrogen bond by at least one hydroxy group between the silanol compounds, having a two-dimensional structure in which the silanol compounds are planarly aligned, and comprising at least one substance selected from the group consisting of an organic compound, a transition metal complex, an inorganic substance, and an elemental substance, the method comprising:

a step of preparing a crystal (S) comprising a plurality of dodecamer silanol compounds represented by the formula (1), having an interaction via a hydrogen bond by at least one hydroxy group between the silanol compounds, having a two-dimensional structure in which the silanol compounds are planarly aligned, and comprising at least one first substance selected from the group consisting of an organic compound, a transition metal complex, an inorganic substance, and an elemental substance; and

a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

In particular, when the crystal of the present embodiment has a three-dimensional structure as mentioned above and contains an organic compound, a transition metal complex, an inorganic substance, or an elemental substance inside the three-dimensional structure (the crystal in this case is also referred to as a "substance-containing three-dimensional-structure crystal"), a method of producing a crystal (P) by impregnating the crystal produced by the above recrystallization method with a substance selected from the group consisting of an organic compound, a transition metal complex, an inorganic substance, and an elemental substance or a solution thereof is preferably applicable. When a substance-containing three-dimensional-structure crystal is produced by the production method including the above recrystallization step, it may be difficult to include the substance inside the three-dimensional structure depending on the type of the substance. On the other hand, in the method of impregnation with a substance, the organic compound, transition metal complex, inorganic substance, or elemental substance originally contained in the substance-containing three-dimensional-structure crystal as a raw material can be easily replaced with the substance with which it is impregnated, and as a result, a three-dimensional-structure crystal containing a substance that is difficult to include inside the three-dimensional structure can be produced.

Therefore, one aspect of the present embodiment is a method of producing a crystal (P) having a three-dimensional structure and comprising at least one substance selected from the group consisting of an organic compound, a transition metal complex, an inorganic substance, and an elemental substance inside the three-dimensional structure.

The method of producing a crystal (P) comprises:

a step of preparing a crystal (S) comprising a plurality of dodecamer silanol compounds represented by the formula (1), having an interaction via a hydrogen bond by at least one hydroxy group between the silanol compounds, having a three-dimensional structure in which the silanol compounds are sterically aligned by the interaction via a hydrogen bond, and comprising at least one first substance selected from the group consisting of an organic compound, a transition metal complex, an inorganic substance, and an elemental substance; and

a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

Here, the step of carrying out the replacement in the present embodiment may be carried out twice or more. For example, when the step of carrying out the replacement is carried out twice, the first substance is replaced with the second substance by the first step of carrying out the replacement, and the second substance is replaced with the third substance by the second step of carrying out the replacement.

The crystal (S) may be prepared, for example, by the above method of producing a crystal, specifically, a method of producing a crystal comprising: a step of preparing a solution containing a dodecamer compound represented by the formula (1); and a step of adding, if necessary, at least one substance selected from the group consisting of an organic compound, a transition metal complex, an inorganic substance, and an elemental substance to the solution and carrying out recrystallization by a vapor diffusion process applied to the solution, or by a poor solvent process applied to the solution, or by concentrating the solution under reduced pressure, or by cooling the solution, or by heating the solution. The crystal (S) is preferably prepared by a method of producing a crystal comprising: a step of preparing a solution containing a dodecamer compound represented by the formula (1); and a step of adding the first substance to the solution and carrying out recrystallization by a vapor diffusion process applied to the solution, or by a poor solvent process applied to the solution, or by concentrating the solution under reduced pressure, or by cooling the solution, or by heating the solution.

As the crystal (S), the crystal obtained by the production method comprising a step of carrying out recrystallization may be used as it is, or the silanol compound not arranged in the above recrystallization step and/or the crystal after washing with a solvent in order to remove the reagent and the like at the time of producing the dodecamer silanol compounds described later may be used.

The solvent is not particularly limited, and examples thereof include water, acetonitrile, diethyl ether, diisopropyl ether, tert-butyl ethyl ether, furan, tetrahydrofuran, tetrahydropyran, 1,3-dioxolane, 1,4-dioxane, dimethoxyethane, diethylene glycol dimethyl ether, triethylene glycol dimethyl ether, N,N-dimethylacetamide, N,N-diethylacetamide, N,N-dimethylformamide, N-methylacetamide, dimethylsulfoxide, tetramethylurea, tetraethylurea, ethyl acetate, acetone, 2-butanone, benzene, toluene, cyclohexane, and hexane. These may be used singly or as a mixture of two or more.

When a polar solvent such as water, tetrahydrofuran, 1,4-dioxane, diethylene glycol dimethyl ether, triethylene glycol dimethyl ether, dimethylacetamide, or dimethylurea is used as the solvent, it is preferable to make appropriate adjustment in such a way as to suppress the amount used in order to suppress the dissolution of the crystal. In addition, in

order to suppress the dissolution of the crystal while maintaining the detergency, the above polar solvent and another solvent may be blended and used in an arbitrary ratio.

Specifically, the washing can be carried out by contacting the crystal obtained by the production method comprising a step of carrying out recrystallization with a solvent, and then separating the liquid and the crystal.

The organic compound, transition metal complex, inorganic substance, and elemental substance with which the crystal (S) is contacted may be liquid or solid. When the organic compound, the transition metal complex, the inorganic substance, and the elemental substance are solid, it is preferable to use a solution obtained by dissolving the solid in a solvent to contact it with the crystal (S). In addition, at this time, as the solvent, it is preferable to use a solvent bulkier than the pore diameter of the nanohoneycomb-shaped structure of the three-dimensional crystal. By using the bulkier solvent, the replacement of the substance contained in the crystal (S) tends to occur easily.

[Method of producing dodecamer silanol compound]

Dodecamer silanol compounds can be produced by an organic synthesis technique. Specifically, these can be produced as follows.

The dodecamer silanol compound can be preferably produced by, for example, a production method comprising a proton exchange step of reacting a silicate having a structure represented by the following formula (1') (hereinafter, also abbreviated as a "silicate") with an acidic compound to obtain a solution containing a silanol compound represented by the following formula (1) (hereinafter, also abbreviated as a "proton exchange step").

The silicate salts having the structures represented by the following formula (1') may also be produced by an organic synthesis technique or can also be obtained as commercially available products.

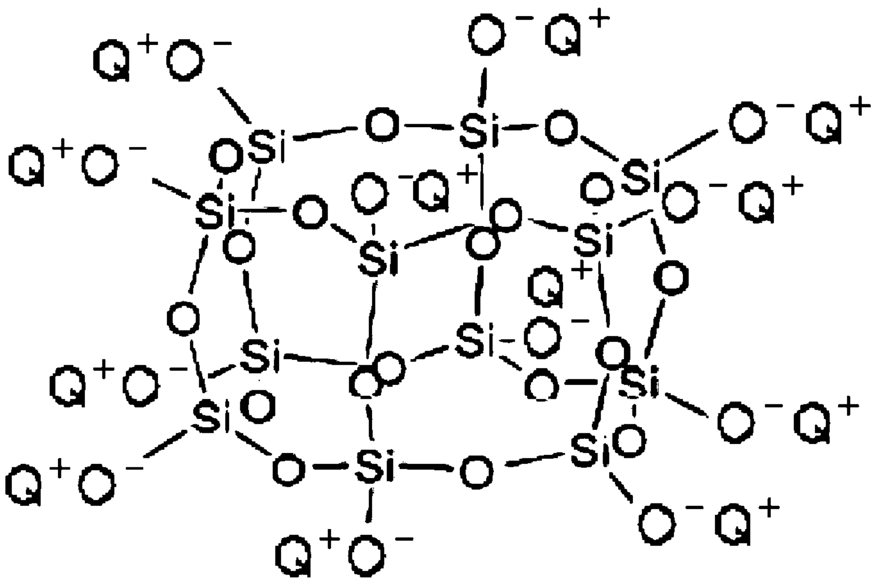

wherein $Q^+$ represents a cation.

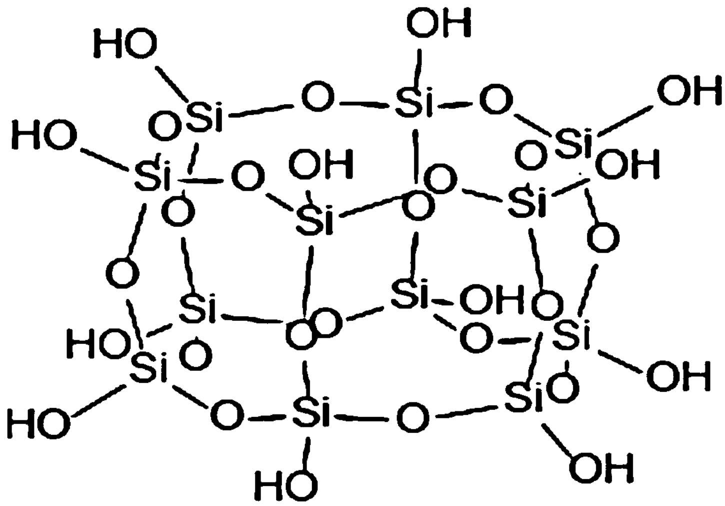

In addition, the method of producing the dodecamer silanol compound preferably further comprises a step of adding a poor solvent to the solution obtained in the proton exchange step so that the silanol compound represented by the formula (1) is deposited to isolate the silanol compound represented by the formula (1) as a powder (hereinafter, also abbreviated as an "isolation step").

Hereinafter, the silicate, the acidic compound, and other reaction conditions and the like in the proton exchange step will be described in detail.

(Proton exchange step)

The specific type of the silicate, the specific type of the acidic compound, the amount of the acidic compound used, the type of a reaction medium which is a solvent or a dispersion medium, reaction conditions, and the like for use in the proton exchange step are not particularly limited, and can be appropriately selected depending on the intended purpose.

The acidic compound for use in the proton exchange step is preferably an acidic compound having an acid dissociation constant pKa in dimethylsulfoxide (DMSO) (hereinafter, also abbreviated as "pKa (DMSO)") of -1 to 20.

Proton exchange with the acidic compound having pKa (DMSO) of -1 to 20 tends to be able to efficiently produce a silanol compound. When pKa (DMSO) is -1 to 20, the exchange between the cation ($Q^+$) of the silicate and the proton ($H^+$) of the acidic compound progresses efficiently while side reaction is suppressed. Because of this, the silanol compound itself can be synthesized in good yields. The method of producing the silanol compound of the present embodiment is an industrially very suitable production method because the reaction progresses rapidly under mild conditions. A smaller value of pKa (DMSO) tends to accelerate the proton exchange step.

pKa (DMSO) means a known numerical value calculated from the concentration of each component in acid dissociation equilibrium at 25°C of the acidic compound in DMSO. Specifically, pKa is a common logarithmized numerical value of a value Ka calculated by the following expression.

[Expression 1]

$$HA \rightleftarrows H^+ + A^-$$

$$K_a = \frac{[H^+][A^-]}{[HA]}$$

In the proton exchange step, a silicate having a structure represented by the following formula (1)' is reacted with an acidic compound.

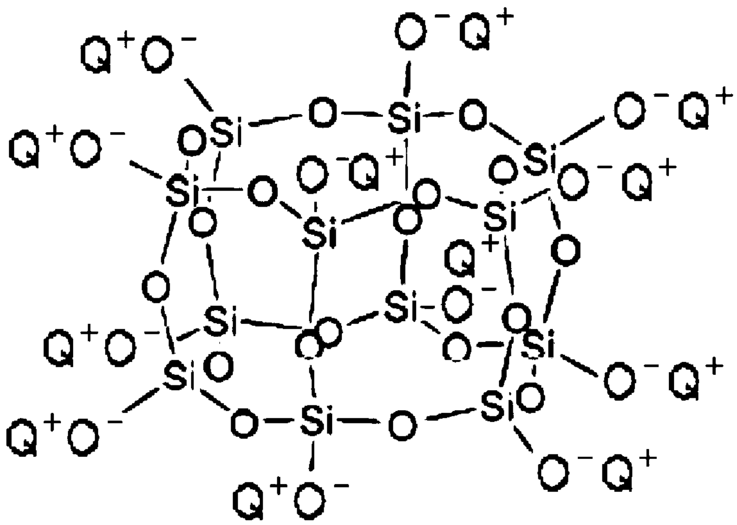

(1)'

wherein $Q^+$ represents a cation.

In the formula (1)', examples of the cation which is $Q^+$ include, but are not particularly limited to, an alkali metal ion such as a lithium ion ($Li^+$), a sodium ion ($Na^+$), and a potassium ion ($K^+$), an alkaline earth metal ion such as a magnesium ion ($Mg^{2+}$) and a calcium ion ($Ca^{2+}$), a transition metal ion such as an iron(III) ion ($Fe^{3+}$), a copper(II) ion ($Cu^{2+}$), and a zinc ion ($Zn^{2+}$), and an ammonium ion such as an ammonium ion ($NH_4^+$), a tetramethylammonium ion ($NMe_4^+$), an ethyltrimethylammonium ion ($NEtMe_3^+$), a diethyldimethylammonium ion ($NEt_2Me_2^+$), a triethylmethylammonium ion ($NEt_3Me^+$), a tetraethylammonium ion ($NEt_4^+$), a tetrapropylammonium ion ($NPr_4^+$), and a tetrabutylammonium ion ($NBu_4^+$). Among these, a sodium ion ($Na^+$), a potassium ion ($K^+$), a tetramethylammonium ion ($NMe_4^+$), a tetraethylammonium ion ($NEt_4^+$), and an ethyltrimethylammonium ion ($NEtMe_3^+$) are particularly preferable.

In the proton exchange step, the silicate to be reacted with the acidic compound may be, for example, but is not particularly limited to, hydrate of a polyhedral potassium silicate dodecamer ($Q_{12}K_{12}$) (dodecapotassium-2,4,6,8,10,12,14,16,18,20,22,24,25,26,27,28,29,30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triacontane-1,3,5,7,9,11,13,15,17,19,21,23-dodecakis(olate) bis(α-dextrin) hydrate ((hereinafter, also abbreviated as "$Q_{12}K_{12}\cdot 2\alpha CD\cdot nH_2O$")) represented by the following formula in which two molecules of α-cyclodextrin (αCD) coordinate at upper and lower sites, as described in Angew. Chem. Int. Ed. Engl. 1997, 36, 743.

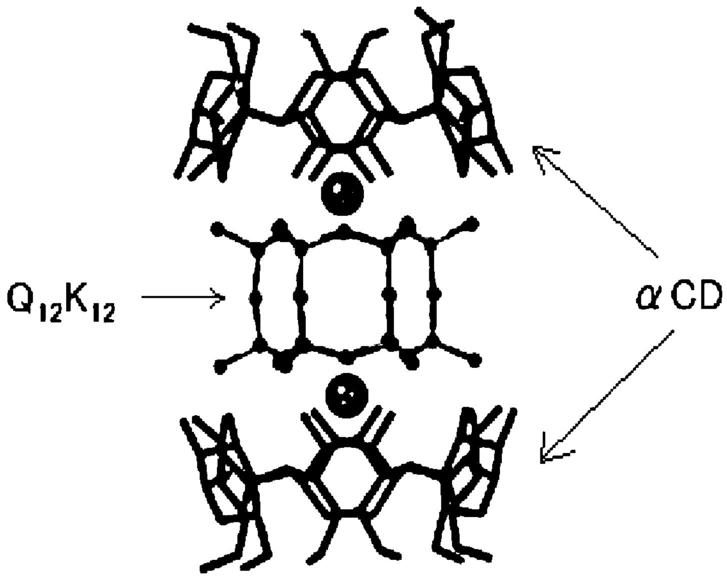


$Q_{12}K_{12}\cdot 2\alpha CD\cdot nH_2O$

Such $Q_{12}K_{12}\cdot 2\alpha CD\cdot nH_2O$ can be prepared with reference to, for example, but not particularly limited to, the description of Angew. Chem. Int. Ed. Engl. 1997, 36, 743. Or Crystals 2018, 8, 457.

The acidic compound is preferably an acidic compound having pKa (DMSO) of -1 to 20. pKa (DMSO) of the acidic compound is preferably 0 or more, more preferably 1 or more, further preferably 2 or more, and preferably 16 or less, more preferably 14 or less, further preferably 8 or less. When pKa (DMSO) of the acidic compound falls within the above range, a silanol compound can be efficiently produced.

Specific examples of the acidic compound include, but are not particularly limited to, an inorganic acid such as nitric acid ($pK_a$ (DMSO) of 1.4), sulfuric acid (pKa1 (DMSO) of 1.4, pKa2 (DMSO) of 14.7), or hydrochloric acid (pKa (DMSO) of 2.1), phosphoric acid (pKa1 (DMSO) of 1.83, pKa2 (DMSO) of 6.43, pKa3 (DMSO) of 11.46), and at least one organic acid selected from the group consisting of acetic acid or compounds having the structures represented by the following formulas (b-1) to (b-5).

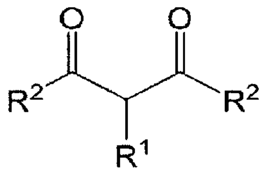

(b−1)

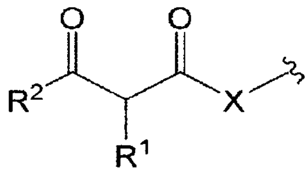

(b−2)

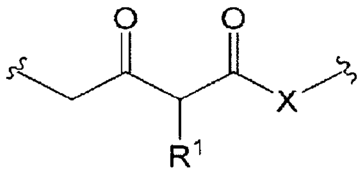

(b−3)

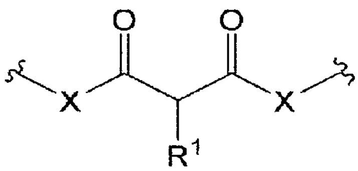

(b−4)

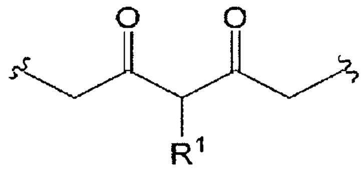

(b−5)

wherein each X independently represents an oxygen atom, a sulfur atom, or an amino group ($-NR^3-$), and $R^1$ represents a hydrogen atom or a hydrocarbon group having 1 to 14 carbon atoms, and each $R^2$ independently represents a hydrogen atom or a hydrocarbon group having 1 to 14 carbon atoms.

When a proton exchange reaction using an organic acid is carried out in a reaction medium described later such as N,N-dimethylacetamide (hereinafter, also referred to as "DMAc") or methanol (hereinafter, also referred to as "MeOH"), the ammonium salt or alkali metal salt produced is dissolved in the reaction medium. Because of this, it is preferable to separate the ammonium salt or alkali metal salt, which is a by-product, by column purification or the like. On the other hand, when a proton exchange reaction using an inorganic acid is carried out in tetrahydrofuran (hereinafter, also referred to as "THF") or the like, which is a reaction medium described later, the ammonium salt or alkali metal salt produced and α-dextrin and a chemical species derived from α-dextrin are difficult to dissolve in the reaction medium. Because of this, the ammonium salt or alkali metal salt can be separated by a simple separation unit such as filter filtration to obtain a silanol compound solution, which is a filtrate. Therefore, the acidic compound is preferably an inorganic acid.

Among the inorganic acids, nitric acid, sulfuric acid, hydrochloric acid, and phosphoric acid are preferable, nitric acid or hydrochloric acid is more preferable, and hydrochloric acid is particularly preferable. Hydrochloric acid is inexpensive, and use of hydrochloric acid tends to elevate yields.

The wavy line in the formulas (b-2) to (b-5) means that there is an arbitrary structure ahead thereof. For example, the acidic compound may contain a functional group or the like that does not participate in the reaction. Therefore, for example, an acidic compound having a structure represented by the formula (b-4) may be a compound containing a hydrocarbon group such as a methyl group ahead of the oxygen atom corresponding to X, such as dimethyl malonate represented by the following formula. In addition, for example, an acidic compound having a structure represented by the formula (b-4) may be a compound in which hydrocarbon groups ahead of the oxygen atoms corresponding to X are bonded to form a ring structure, such as Meldrum's acid represented by the following formula.

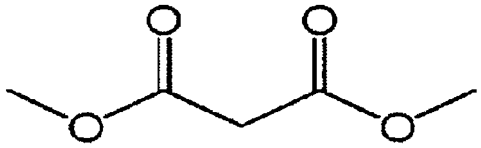

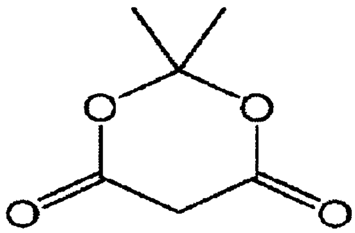

\- Dimethyl malonate Meldrum's acid

As structures represented by the formulas (b-1) to (b-5) are so-called β-dicarbonyl structures, hydrogen of the methylene group sandwiched between two carbonyl groups, i.e., α-hydrogen, is known to work as an acid point. By having structures represented by the formulas (b-1) to (b-5), acidic compounds exhibit a moderate acid dissociation constant, while electrons of anions produced by proton dissociation are delocalized in the structures. For example, an acidic compound having a structure represented by the formula (b-2) dissociates a proton as represented by the following formula. Because of this, acidic compounds having structures represented by the formulas (b-1) to (b-5) suppress anionic basicity and nucleophilicity and can presumably suppress side reaction effectively.

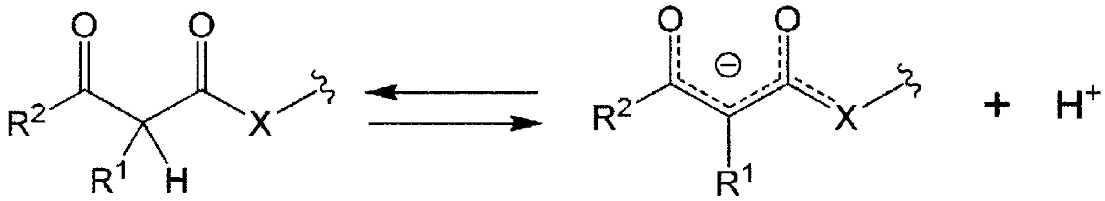

Examples of the amino group (-$NR^3$-), which is X, include a secondary amino group (-NH-). X is particularly preferably an oxygen atom. When $R^1$ is a hydrocarbon group, the number of carbon atoms is preferably 6 or less, more preferably 5 or less, and further preferably 4 or less. Examples of $R^1$ include, but are not particularly limited to, a hydrogen atom, a methyl group (-Me), an ethyl group (-Et), a n-propyl group (-nPr), an i-propyl group (-iPr), a n-butyl group (-nBu), and a phenyl group (-Ph), and $R^1$ is preferably a hydrogen atom.

When $R^2$ is a hydrocarbon group, the number of carbon atoms is preferably 5 or less, more preferably 4 or less, and further preferably 3 or less. Examples of $R^2$ includes a hydrogen atom, a methyl group (-Me), an ethyl group (-Et), a n-propyl group (-nPr), an i-propyl group (-iPr), and a n-butyl group (-nBu), and $R^2$ is preferably a hydrogen atom.

Examples of the acidic compound represented by the formula (b-4) include, but are not particularly limited to, an acidic compound represented by the following formula (b-4-1). Examples of the acidic compound represented by the formula (b-5) include an acidic compound represented by the following formula (b-5-1).

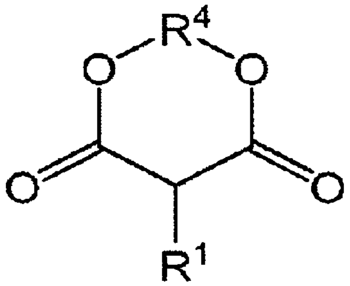

(b−4−1)

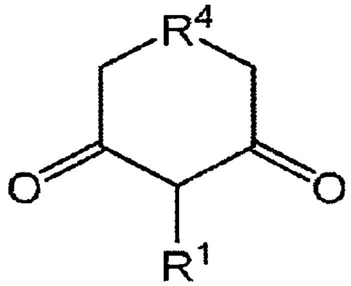

(b−5−1)

wherein $R^1$ is a hydrogen atom or a hydrocarbon group having 1 to 14 carbon atoms, and $R^4$ is a divalent hydrocarbon group having 1 to 14 carbon atoms, respectively.

Examples of $R^4$ include, but are not particularly limited to, a methylene group (-$CH_2$-), an ethylene group (-$CH_2CH_2$-), a n-propylene group (-$CH_2CH_2CH_2$-), a dimethylmethylene group (-$C(CH_3)_2$-), and an i-propylene group (-$CH(CH_3)CH_2$-).

Specific examples of the acidic compound include, but are not particularly limited to, acetic acid (pKa (DMSO) of

12.6), benzoic acid (pKa (DMSO) of 11.1), Meldrum's acid (pKa (DMSO) of 7.3), a Meldrum's acid derivative, dimedone (pKa (DMSO) of 11.2), a dimedone derivative, acetylacetone (pKa (DMSO) of 13.3), and an acetylacetone derivative (see the formulas below).

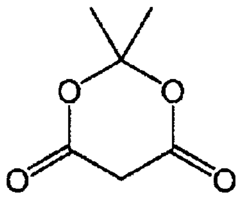

Meldrum's acid

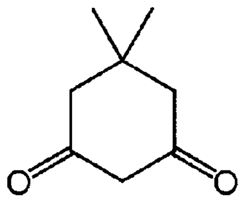

Dimedone

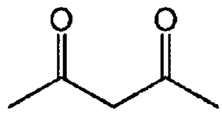

Acetylacetone

As an acidic compound, a low molecular weight compound such as Meldrum's acid, or an organic solid material such as a resin or an inorganic solid material such as silica or carbon to which a compound represented by any of the formulas (b-2) to (b-5) is introduced can be utilized. When the acidic compound is such a solid, the acidic compound can be packed in a column and utilized like an ion exchange resin. Because of this, a silanol compound can be produced very efficiently. A general solid acid (e.g., Amberlyst or Amberlite) may be used as the acidic compound.

In particular, the acidic compound is preferably a resin having at least one structure selected from the group consisting of the formulas (b-2) to (b-5), and the acidic compound can preferably be regenerated as an acidic compound by carrying out a proton exchange step and then exposure to an acidic aqueous solution such as hydrochloric acid.

The amount of the acidic compound used in the proton exchange step is usually 1 time or more, preferably 1.5 times or more, more preferably 2.0 times or more, and usually 50 times or less, preferably 20 times or less, more preferably 5 times or less that of the silicate in terms of the amount of substance. When the amount of the acidic compound used falls within the above range, a silanol compound can be efficiently produced.

The reaction in the proton exchange step is preferably carried out in a liquid (reaction medium). Examples of such a reaction medium include, but are not particularly limited to, an ether-based liquid such as tetrahydrofuran (THF), tetrahydropyran, dioxane, diethyl ether ($Et_2O$), dimethyl ether, diisopropyl ether, diphenyl ether, methyl ethyl ether, diethylene glycol dimethyl ether, and triethylene glycol dimethyl ether, an alcohol-based liquid such as methanol, ethanol, n-propanol, and i-propanol, an amide-based liquid such as formamide, N,N-dimethylformamide (DMF), acetamide, N-methylacetamide, N,N-dimethylacetamide (DMAc), urea, and tetramethylurea, an ester-based liquid such as ethyl acetate, n-amyl acetate, and ethyl lactate, a halogen-based liquid such as methylene chloride, chloroform, carbon tetrachloride, tetrachloroethane, and hexachloroethane, acetonitrile, acetone, methyl ethyl ketone, phenyl methyl ketone, dimethylsulfoxide (DMSO), and water.

The reaction medium is not limited to a single liquid, and two or more liquids may be combined.

The amount of the reaction medium used in the proton exchange step is preferably an amount such that the content of the silicate is 0.005 to 0.04 mol/L. This is because a silanol compound can be efficiently produced with such a content of the silicate. The reaction temperature in the proton exchange step is usually -80°C or more, preferably 0°C or more, more preferably 20°C or more, and usually 200°C or less, preferably 70°C or less, more preferably 40°C or less. The reaction time in the proton exchange step is usually 48 hours or less, preferably 24 hours or less, more preferably 8 hours or less, and particularly preferably 1 hour or less. Within the above ranges, a silanol compound can be efficiently produced.

(Isolation step)

The method of producing the silanol compound of the present embodiment preferably comprises a step of adding a poor solvent to the solution of the silanol compound represented by the formula (1) obtained in the proton exchange step so that the silanol compound represented by the formula (1) is deposited to isolate the silanol compound represented by the formula (1) as a powder. By comprising such a step, the method of producing the silanol compound of the present embodiment does not cause dehydration condensation without a solvent of crystallization, and can very conveniently isolate the silanol compound represented by the formula (1) as a powder alone.

Examples of the poor solvent for depositing the silanol compound represented by the formula (1) include, but are not particularly limited to, hexane, benzene, toluene, dibutyl ether, diisopropyl ether, diethyl ether, dichloromethane, chloroform, and ethyl acetate. Among them, hexane, benzene, diisopropyl ether, and ethyl acetate are preferable, and diethyl ether and ethyl acetate are particularly preferable.

When a precursor (e.g., $Q_{12}K_{12}\cdot 2\alpha CD\cdot nH_2O$) in which a ligand (e.g., $\alpha$CD) coordinates is used as the silicate to be reacted with the acidic compound, it is preferable in the isolation step to use a solvent that dissolves the ligand and a degradation product of the ligand (e.g., $\alpha$CD and an $\alpha$CD degradation product) as the poor solvent for depositing the silanol

compound represented by the formula (1).

The boiling point of the poor solvent for depositing the silanol compound represented by the formula (1) is usually 0°C or higher, preferably 10°C or higher, more preferably 30°C or higher, and usually 300°C or lower, preferably 200°C or lower, more preferably 150°C or lower.

For the solution obtained in the proton exchange step, it is preferable to filter a salt produced through the reaction, and then concentrate the filtrate to prepare a liquid concentrate. Use of the liquid concentrate can further efficiently deposit the silanol compound represented by the formula (1).

In the isolation step, the time or the like for depositing the silanol compound represented by the formula (1) is not particularly limited, and can be appropriately selected, and is usually 24 hours or shorter, preferably 12 hours or shorter, more preferably 6 hours or shorter, and usually 0.25 hours or longer, preferably 0.5 hours or longer, more preferably 1 hour or longer. Stirring, if carried out in depositing the silanol compound, renders deposited particles more uniform and facilitates powdering in a drying step.

Examples of the method of isolating the silanol compound represented by the formula (1) as a powder include, but are not particularly limited to, filtration.

Further, the powder of the silanol compound represented by the formula (1) obtained by such an isolation method is preferably dried. A drying temperature, a drying pressure, a drying time, and the like are not particularly limited, and can be appropriately selected depending on the intended purpose.

When the crystal of the present embodiment is produced, the desired one-dimensional structure, two-dimensional structure, or three-dimensional structure can be obtained by controlling the formation of a hydrogen bond in the recrystallization step.

Examples of a method of controlling the formation of a hydrogen bond include a method of selecting the type of a solvent for dissolving a silanol compound, a method of controlling the temperature during recrystallization, a method of controlling the degree of decompression when removing the solvent, and a method of adding a substance selected from the group consisting of an organic compound, a transition metal complex, an inorganic substance, and an elemental substance, preferably an organic compound, in addition to the solvent. Among these control methods, a method of selecting the type of a solvent for dissolving a silanol compound is preferable.

In particular, by using a solvent having a low hydrogen bonding ability with a silanol compound as the solvent, the control is carried out such that the formation of a hydrogen bond between the silanol compound and the solvent molecule is suppressed and that the formation of a hydrogen bond between the silanol compounds is promoted. The solvent may be appropriately selected from diethyl ether, diisopropyl ether, tert-butyl ethyl ether, furan, tetrahydrofuran, tetrahydropyran, 1,3-dioxolane, 1,4-dioxane, dimethoxyethane, diethylene glycol dimethyl ether, triethylene glycol dimethyl ether, N,N-dimethylacetamide, N,N-diethylacetamide, N,N-dimethylformamide, N-methylacetamide, dimethylsulfoxide, tetramethylurea, tetraethylurea, water, and the like, and these may be used singly or as a mixture of two or more. In addition, also by using a mixed solvent of two or more as the solvent and changing the mixing ratio of the two, the degree of formation of a hydrogen bond between the silanol compound and the solvent molecule can be adjusted, and the desired one-dimensional structure, two-dimensional structure, or three-dimensional structure can be produced.

## Examples

Next, the present invention will be described further specifically with reference to Examples, but the present invention is not limited to these Examples.

[Synthesis Example 1]

24.051 mL (288.0 mmol) of hydrochloric acid was added to a dispersion obtained by suspending 41.572 g (9.674 mmol) of dodecapotassium-2,4,6,8,10,12,14,16,18,20,22,24,25,26,27,28,29,30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triacontane-1,3,5,7,9,11,13,15,17,19,21,23-dodecakis(olate) bis(α-dextrin) hydrate (hereinafter, also abbreviated as "$Q_{12}K_{12}\cdot 2\alpha CD\cdot nH_2O$"), $Q_{12}K_{12}\cdot 2\alpha CD\cdot 59.1H_2O$, in 480 mL of THF, and the resulting mixture was stirred for 15 minutes to obtain a suspension. This suspension was subjected to filter filtration to obtain a filtrate.

450 mL of ethyl acetate was added to the obtained filtrate, and the resulting mixture was stirred for 60 minutes for reprecipitation (deposition of solid matter). This suspension solution was subjected to filter filtration to separate solid matter. The solid matter was recovered and then dried under reduced pressure to isolate a compound represented by the composition formula $Si_{12}O_{30}H_{12}$ (the compound represented by the following formula (1); 2,4,6,8,10,12,14,16,18,20,22,24,25,26,27,28,29,30-octadecaoxa-1,3,5,7,9,11,13,15,17,19,21,23-dodecasilaheptacyclo[13.9.1.1$^{3,13}$.1$^{5,11}$.1$^{7,21}$.1$^{9,19}$.1$^{17,23}$]triacontane-1,3,5,7,9,11,13,15,17,19,21,23-dodecaol (CAS No. 126347-25-9 (hereinafter, also abbreviated as "$Q_{12}H_{12}$")) as a colorless solid (powder) in a yield of 66% (6.116 g).

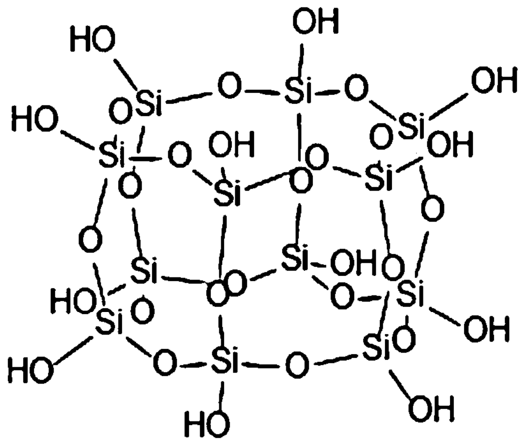

(1)

[Example 1] One-dimensional (rod-shaped) crystal of $Q_{12}H_{12}$ (DMF-containing composition)

0.100 g of $Q_{12}H_{12}$ prepared and obtained by the method according to Synthesis Example 1 was dissolved in 2.0 mL of N,N-dimethylformamide (DMF), and the solution was recrystallized at room temperature by a method of adding a poor solvent diethyl ether to vapor diffusion, i.e., a so-called vapor diffusion process, to isolate 0.131 g of a colorless solid (columnar crystal) that was a composition containing 58.6% by mass of $Q_{12}H_{12}$ ($^1$H-NMR (DMSO-$d_6$): 7.08 ppm, $^{29}$Si-NMR (DMSO-$d_6$): -101.3 ppm).

In addition, single crystal X-ray crystal structure analysis revealed that the crystal obtained had a crystal structure in which configurations of one molecule of $Q_{12}H_{12}$ and eight molecules of DMF assembled, and a one-dimensional (rod-shaped) structure (one-dimensional rod-shaped structure of 8-membered ring (tetramer) faces) in which $Q_{12}H_{12}$ molecules were hydrogen-bonded to each other and stabilized. The crystal structure determined from the single crystal X-ray crystal structure analysis is shown in Figure 2.

[Example 2] Two-dimensional (sheet-shaped) crystal of $Q_{12}H_{12}$ (DMAc- and THF-containing composition)

0.030 g of $Q_{12}H_{12}$ prepared and obtained by the method according to Synthesis Example 1 was mixed with 4.0 mL of THF and 0.06 mL of N,N-dimethyl (DMAc), and the solution was recrystallized at room temperature by a method of adding a poor solvent THF at once, i.e., a so-called poor solvent process, to isolate 0.039 g of a colorless solid (plate-shaped crystal) that was a composition containing 64.2% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, two molecules of DMAc, and four molecules of THF assembled, and a two-dimensional (sheet-shaped) structure in which $Q_{12}H_{12}$ molecules were hydrogen-bonded to each other and stabilized. The crystal structure determined from the single crystal X-ray crystal structure analysis is shown in Figure 3.

[Example 3] Three-dimensional (nanosponge-shaped) crystal of $Q_{12}H_{12}$ (THF- and watercontaining composition)

0.102 g of $Q_{12}H_{12}$ prepared and obtained by the method according to Synthesis Example 1 was added to and dissolved in 10.0 mL of THF and 0.15 mL of water, and the solution was allowed to stand at room temperature for recrystallization by a method of adding a poor solvent THF at once, i.e., a so-called poor solvent process, to isolate 0.109 g of a colorless solid (columnar crystal) that was a composition containing 71.9% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, three molecules of THF, and six molecules of water assembled, and a three-dimensional (nanosponge-shaped) structure in which $Q_{12}H_{12}$ molecules were hydrogen-bonded to each other and stabilized. The crystal structure determined from the single crystal X-ray crystal structure analysis is shown in Figure 4.

[Example 4] Three-dimensional (nanohoneycomb-shaped) crystal of $Q_{12}H_{12}$ (dioxane-containing composition)

0.208 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate 0.173 g of a colorless solid (columnar crystal) that was a composition containing

81.4% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$ and one molecule of 1,4-dioxane assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized. The crystal structure determined from the single crystal X-ray crystal structure analysis is shown in Figure 5.

[Example 5] Three-dimensional (nanohoneycomb-shaped) crystal of $Q_{12}H_{12}$ (dioxane-containing composition)

0.100 g of $Q_{12}H_{12}$ prepared and obtained by the method according to Synthesis Example 1 was added to and dissolved in 6.0 mL of 1,4-dioxane and 0.10 mL of water to obtain a solution. This solution was concentrated under reduced pressure (35 torr) at 25°C for recrystallization to isolate 0.081 g of a colorless solid (plate-shaped crystal) that was a composition containing 59.7% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$ and 5.5 molecules of 1,4-dioxane assembled, and a three-dimensional (nanohoneycomb-shaped) structure (type 2 (a structure in which 8-membered ring (tetramer) faces deviated from each other by 1/2 every two molecules)) in which $Q_{12}H_{12}$ molecules were hydrogen-bonded to each other and stabilized. The crystal structure determined from the single crystal X-ray crystal structure analysis is shown in Figure 6.

[Example 6] Three-dimensional (nanohoneycomb-shaped) crystal of $Q_{12}H_{12}$ (diethylene glycol dimethyl ether-containing composition)

0.010 g of $Q_{12}H_{12}$ prepared and obtained by the method according to Synthesis Example 1 was added to 2.0 mL of diethylene glycol dimethyl ether, and this solution was heated at 60°C and then allowed to stand at room temperature and thereby cooled for recrystallization to isolate 0.008 g of a colorless solid (plate-shaped crystal) that was a composition containing 75.5% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$ and two molecules of diethylene glycol dimethyl ether assembled, and a three-dimensional (nanohoneycomb-shaped) structure (type 3 (a structure of 8-membered ring (tetramer) faces)) in which $Q_{12}H_{12}$ molecules were hydrogen-bonded to each other and stabilized. The crystal structure determined from the single crystal X-ray crystal structure analysis is shown in Figure 7.

[Example 7] Three-dimensional (nanohoneycomb-shaped) crystal of $Q_{12}H_{12}$ (benzenecontaining composition)

0.205 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, the residue was washed five times with 3.0 mL of benzene, then 10 mL of benzene was added thereto, and the resulting mixture was allowed to stand at room temperature for 24 hours. A liquid (benzene) was removed to isolate 0.167 g of a colorless solid (columnar crystal) that was a composition containing 84.4% by mass of $Q_{12}H_{12}$ ($^1$H-NMR (DMSO-$d_6$): 7.07 ppm, $^{29}$Si-NMR (DMSO-$d_6$): - 101.2 ppm).

In addition, single crystal X-ray crystal structure analysis revealed that the crystal obtained had a crystal structure in which configurations of one molecule of $Q_{12}H_{12}$ and one molecule of benzene assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 8] Three-dimensional (nanohoneycomb-shaped) crystal of $Q_{12}H_{12}$ (naphthalene-containing composition)

0.202 g of $Q_{12}H_{12}$ prepared and obtained by the method according to Synthesis Example 1 was added to and dissolved in 5.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 5.0 mL of 1,3,5-triisopropylbenzene and 0.515 g (4.000 mmol) of naphthalene was added to the residue, and the resulting mixture was allowed to stand at 60°C for 44 hours. A liquid (naphthalene/1,3,5-triisopropylbenzene solution) was removed to isolate 0.147 g of a colorless solid (columnar crystal) that was a composition

containing 90.3% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.59 molecules of naphthalene, and 0.33 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 9] Three-dimensional (nanohoneycomb-shaped) crystal of $Q_{12}H_{12}$ (anthracene-containing composition)

0.210 g of $Q_{12}H_{12}$ prepared and obtained by the method according to Synthesis Example 1 was added to and dissolved in 5.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 20.0 mL of 1,3,5-triisopropylbenzene and 0.180 g (1.010 mmol) of anthracene was added to the residue, and the resulting mixture was allowed to stand at 60°C for 44 hours. A liquid (anthracene/1,3,5-triisopropylbenzene solution) was removed to isolate 0.156 g of a colorless solid (columnar crystal) that was a composition containing 85.7% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.70 molecules of anthracene, and 0.31 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 10] Three-dimensional (nanohoneycomb-shaped) crystal of $Q_{12}H_{12}$ (biphenyl-containing composition)

0.211 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 5.0 mL of 1,3,5-triisopropylbenzene and 0.255 g (1.650 mmol) of biphenyl was added to the residue, and the resulting mixture was allowed to stand at 25°C for 48 hours under a condition of reduced pressure (100 hPa). A liquid (biphenyl/1,3,5-triisopropylbenzene solution) was removed to isolate 0.171 g of a colorless solid (columnar crystal) that was a composition containing 88.6% by mass of $Q_{12}H_{12}$ ($^1$H-NMR (DMSO-$d_6$): 7.07 ppm, $^{29}$Si-NMR (DMSO-$d_6$): - 101.2 ppm).

In addition, single crystal X-ray crystal structure analysis revealed that the crystal obtained had a crystal structure in which configurations of one molecule of $Q_{12}H_{12}$, 0.65 molecules of biphenyl, and 0.15 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 11] Three-dimensional (nanohoneycomb-shaped) crystal of $Q_{12}H_{12}$ (p-terphenyl-containing composition)

0.208 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 5.0 mL of 1,3,5-triisopropylbenzene and 0.234 g (1.016 mmol) of p-terphenyl was added to the residue, and the resulting mixture was allowed to stand at 65°C for 48 hours under a condition of reduced pressure (100 torr). A liquid (p-terphenyl/1,3,5-triisopropylbenzene solution) was removed to isolate 0.176 g of a colorless solid (columnar crystal) that was a composition containing 86.7% by mass of $Q_{12}H_{12}$ ($^1$H-NMR (DMSO-$d_6$): 7.07 ppm, $^{29}$Si-NMR (DMSO-$d_6$): - 101.2 ppm).

In addition, single crystal X-ray crystal structure analysis revealed that the crystal obtained had a crystal structure in which configurations of one molecule of $Q_{12}H_{12}$, 0.54 molecules of p-terphenyl, and 0.06 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 12] Three-dimensional (nanohoneycomb-shaped) crystal of $Q_{12}H_{12}$ (1,4-benzoquinone-containing composition)

0.203 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 8.0 mL of 1,3,5-triisopropylbenzene and 0.112 g (1.034 mmol) of 1,4-benzoquinone was added to the residue, and the resulting mixture was allowed to stand at room temperature for 70 hours under a condition of reduced pressure (100 hPa). A liquid (1,4-benzoquinone/1,3,5-triisopropylbenzene solution) was removed to isolate 0.159 g of a yellow solid (columnar crystal) that was a composition containing 88.2% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.96 molecules of 1,4-benzoquinone, and 0.17 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 13] Three-dimensional (nanohoneycomb-shaped) crystal of $Q_{12}H_{12}$ (thiophene-containing composition)

0.211 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, the residue was washed five times with 3.0 mL of thiophene, then 10 mL of thiophene was added thereto, and the resulting mixture was allowed to stand at room temperature for 24 hours. A liquid (thiophene) was removed to isolate 0.200 g of a colorless solid (columnar crystal) that was a composition containing 74.2% by mass of $Q_{12}H_{12}$ ($^1$H-NMR (DMSO-$d_6$): 7.07 ppm, $^{29}$Si-NMR (DMSO-$d_6$): - 101.2 ppm).

In addition, single crystal X-ray crystal structure analysis revealed that the crystal obtained had a crystal structure in which configurations of one molecule of $Q_{12}H_{12}$ and one molecule of thiophene assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 14] Three-dimensional (nanohoneycomb-shaped) crystal of $Q_{12}H_{12}$ (dibromoterthiophene-containing composition)

0.103 g of $Q_{12}H_{12}$ prepared and obtained by the method according to Synthesis Example 1 was added to and dissolved in 10.0 mL of 1,4-dioxane and 0.10 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 12.0 mL of 1,3,5-triisopropylbenzene and 0.051 g (0.126 mmol) of dibromoterthiophene was added to the residue, and the resulting mixture was allowed to stand at 60°C for 100 hours. A liquid (dibromoterthiophene/1,3,5-triisopropylbenzene solution) was removed to isolate 0.083 g of a dark green solid (columnar crystal) that was a composition containing 79.4% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.50 molecules of dibromoterthiophene, and 0.29 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 15] Three-dimensional (nanohoneycomb-shaped) crystal of $Q_{12}H_{12}$ (dodecane-containing composition)

0.206 g of $Q_{12}H_{12}$ prepared and obtained by the method according to Synthesis Example 1 was added to and dissolved in 6.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added

thereto, and the resulting mixture was allowed to stand at room temperature for 24 hours. A liquid (acetonitrile) was removed, the residue was washed five times with 3.0 mL of benzene, then 10 mL of benzene was added thereto, and the resulting mixture was allowed to stand at room temperature for 24 hours. A liquid (benzene) was removed, the residue was washed five times with 3.0 mL of dodecane, then 10 mL of dodecane was added thereto, and the resulting mixture was allowed to stand at room temperature for 24 hours. A liquid (dodecane) was removed to isolate 0.169 g of a colorless solid (columnar crystal) that was a composition containing 85.9% by mass of $Q_{12}H_{12}$ ($^1$H-NMR (DMF-$d_7$): 7.40 ppm, $^{29}$Si-NMR (DMF-$d_7$): -100.5 ppm).

In addition, single crystal X-ray crystal structure analysis revealed that the crystal obtained had a crystal structure in which configurations of one molecule of $Q_{12}H_{12}$ and 0.80 molecules of dodecane assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 16] Three-dimensional (nanohoneycomb-shaped) crystal of $Q_{12}H_{12}$ (ferrocene-containing composition)

0.102 g of $Q_{12}H_{12}$ prepared and obtained by the method according to Synthesis Example 1 was added to and dissolved in 10.0 mL of 1,4-dioxane and 0.10 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 6.0 mL of 1,3,5-triisopropylbenzene and 0.380 g (2.042 mmol) of ferrocene was added to the residue, and the resulting mixture was allowed to stand for 147 hours under conditions of heating and reduced pressure (50°C, 75 torr). A liquid (ferrocene/1,3,5-triisopropylbenzene solution) was removed to isolate 0.086 g of a black solid (columnar crystal) that was a composition containing 89.7% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.36 molecules of ferrocene, and 0.70 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 17] Three-dimensional (nanohoneycomb-shaped) crystal of $Q_{12}H_{12}$ (cobalt complex-containing composition)

0.206 g of $Q_{12}H_{12}$ prepared and obtained by the method according to Synthesis Example 1 was added to and dissolved in 5.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 2.0 mL of 1,3,5-triisopropylbenzene and 0.180 g (1.000 mmol) of cyclopentadienyldicarbonylcobalt ($CoCp(CO)_2$) was added to the residue, and the resulting mixture was allowed to stand at room temperature for 48 hours. A liquid (cyclopentadienyldicarbonylcobalt/1,3,5-triisopropylbenzene solution) was removed to isolate 0.181 g of a brown solid (columnar crystal) that was a composition containing 80.2% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$, 0.97 molecules of cyclopentadienyldicarbonylcobalt, and 0.75 molecules of acetonitrile assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 18] Three-dimensional (nanohoneycomb-shaped) crystal of $Q_{12}H_{12}$ (iodine-containing composition)

0.212 g of $Q_{12}H_{12}$ prepared and obtained by the method according to Synthesis Example 1 was added to and dissolved in 10.0 mL of 1,4-dioxane and 0.20 mL of water to obtain a solution. This solution was heated at 100°C and kept for 6 hours for recrystallization to isolate a colorless solid (columnar crystal) that was a composition containing 81.4% by mass of $Q_{12}H_{12}$. This colorless solid was washed five times with 3.0 mL of acetonitrile, then 10 mL of acetonitrile was added thereto, and the resulting mixture was allowed to stand at room temperature for 24 hours. A liquid (acetonitrile) was removed, then a solution containing 15.0 mL of 1,3,5-triisopropylbenzene and 0.257 g (1.012 mmol) of iodine ($I_2$) was added to the residue, and the resulting mixture was allowed to stand at room temperature for 51 hours. A liquid(iodine/1,3,5-triisopropylbenzene solution) was removed to isolate 0.192 g of a red solid (columnar crystal) that was a composition containing 62.0% by mass of $Q_{12}H_{12}$ ($^1$H-NMR (DMSO-$d_6$): 7.07 ppm, $^{29}$Si-NMR (DMSO-$d_6$): -101.2 ppm).

In addition, single crystal X-ray crystal structure analysis revealed that the crystal obtained had a crystal structure in which configurations of one molecule of $Q_{12}H_{12}$ and two molecules of iodine assembled, and a three-dimensional (nanohoneycomb-shaped) structure (type 1 (a structure of 12-membered ring (hexamer) faces)) in which $Q_{12}H_{12}$ molecules were hydrogen-bonded to each other and stabilized.

[Example 19] One-dimensional (rod-shaped) crystal of $Q_{12}H_{12}$ (phenazine-containing composition)

0.100 g of $Q_{12}H_{12}$ prepared and obtained by the method according to Synthesis Example 1 was dissolved in 20 mL of THF, and the solution was subjected to filter filtration. 0.5 mL of a THF solution with 0.25 mol% of phenazine dissolved therein was added to the obtained filtrate, and the resulting mixture was allowed to stand at room temperature under a condition of reduced pressure (130 hPa) until the solvent no longer remained, to isolate a yellow solid (needle-shaped crystal) that was a composition containing 43.4% by mass of $Q_{12}H_{12}$.

In addition, single crystal X-ray crystal structure analysis revealed that the crystal obtained had a crystal structure in which configurations of one molecule of $Q_{12}H_{12}$ and six molecules of phenazine assembled, and a one-dimensional (rod-shaped) structure (one-dimensional rod-shaped structure of 12-membered ring (hexamer) faces) in which $Q_{12}H_{12}$ molecules were hydrogen-bonded to each other and stabilized. The crystal structure determined from the single crystal X-ray crystal structure analysis is shown in Figure 8.

[Example 20] Two-dimensional (sheet-shaped) crystal of $Q_{12}H_{12}$ (2,2-bipyridyl-containing composition)

0.100 g of $Q_{12}H_{12}$ prepared and obtained by the method according to Synthesis Example 1 was dissolved in 20 mL of THF, and the solution was subjected to filter filtration. 0.05 mL of 2,2-bipyridyl was added to the obtained filtrate, and the resulting mixture was allowed to stand at room temperature under a condition of reduced pressure (100 hPa) until the solvent no longer remained, to isolate a colorless solid (amorphous crystal) that was a composition containing 45.1% by mass of $Q_{12}H_{12}$.

Single crystal X-ray crystal structure analysis revealed that the crystal obtained had a crystal structure in which configurations of one molecule of $Q_{12}H_{12}$, six molecules of 2,2-bipyridyl, and one molecule of THF assembled, and a two-dimensional (sheet-shaped) structure in which $Q_{12}H_{12}$ molecules were hydrogen-bonded to each other and stabilized. The crystal structure determined from the single crystal X-ray crystal structure analysis is shown in Figure 9.

[Example 21] Three-dimensional (nanohoneycomb-shaped) crystal of $Q_{12}H_{12}$ (pyridine-containing composition)

0.100 g of $Q_{12}H_{12}$ prepared and obtained by the method according to Synthesis Example 1 was dissolved in 20 mL of THF, and the solution was subjected to filter filtration. 0.05 mL of pyridine was added to the obtained filtrate, and the resulting mixture was concentrated at room temperature under a condition of reduced pressure (100 hPa) until the amount of the solution remaining was 1 mL, to isolate a colorless solid (rectangular plate-shaped crystal) that was a composition containing 62.3% by mass of $Q_{12}H_{12}$.

Single crystal X-ray crystal structure analysis revealed that the crystal obtained had a crystal structure in which configurations of one molecule of $Q_{12}H_{12}$, four molecules of pyridine, and two molecules of THF assembled, and a three-dimensional structure in which $Q_{12}H_{12}$ molecules were hydrogen-bonded to each other and stabilized. The crystal structure determined from the single crystal X-ray crystal structure analysis is shown in Figure 10.

[Example 22] Three-dimensional (nanohoneycomb-shaped) crystal of $Q_{12}H_{12}$ (phenazine-containing composition)

0.100 g of $Q_{12}H_{12}$ prepared and obtained by the method according to Synthesis Example 1 was dissolved in 20 mL of THF, and the solution was subjected to filter filtration. 0.5 mL of a THF solution with 0.25 mol% of phenazine dissolved therein was added to the obtained filtrate, and the resulting mixture was allowed to stand at room temperature for 15 hours under a condition of reduced pressure (300 hPa) and then concentrated at 130 hPa until the amount of the solution remaining was 1 mL, to isolate a yellow solid (rectangular plate-shaped crystal) that was a composition containing 62.2% by mass of $Q_{12}H_{12}$.

Single crystal X-ray crystal structure analysis revealed that the crystal obtained had a crystal structure in which configurations of one molecule of $Q_{12}H_{12}$, two molecules of phenazine, and two molecules of THF assembled, and a three-dimensional structure in which $Q_{12}H_{12}$ molecules were hydrogen-bonded to each other and stabilized. The crystal structure determined from the single crystal X-ray crystal structure analysis is shown in Figure 11.

The present application is based on the Japanese patent application filed on September 19, 2023 (Japanese Patent Application No. 2023-151414), the contents of which are incorporated herein by reference.

## Industrial Applicability

For example, by heating the crystal of the present invention or contacting the crystal with an acid, a base, and/or the like, a material having a regular fine structure can be obtained. In particular, by forming a complex with another organic compound, transition metal complex, inorganic substance, elemental substance, or the like, a finely structurally controlled material having an unprecedented physical property can be created.

In addition, the crystal of the present invention has industrial applicability as a raw material for obtaining a $SiO_2$ material that can be used for an application of drug delivery or the like.

## Claims

1. A crystal comprising a plurality of silanol compounds represented by the following formula (1) and having an interaction via a hydrogen bond by at least one hydroxy group between the silanol compounds.

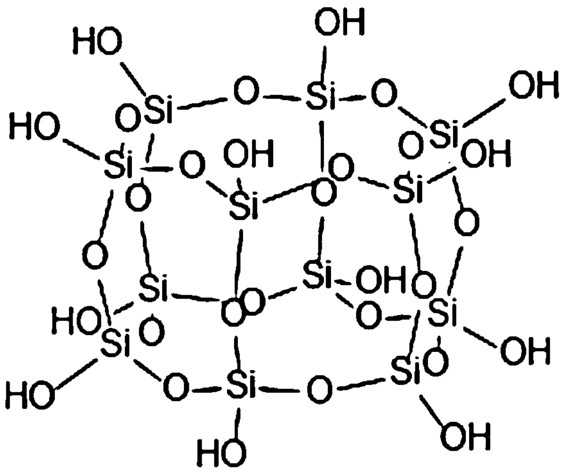

(1)

2. The crystal according to claim 1, wherein the crystal has a one-dimensional structure in which the silanol compounds are linearly aligned by the interaction via a hydrogen bond.

3. The crystal according to claim 1, wherein the crystal has a two-dimensional structure in which the silanol compounds are planarly aligned by the interaction via a hydrogen bond.

4. The crystal according to claim 1, wherein the crystal has a three-dimensional structure in which the silanol compounds are sterically aligned by the interaction via a hydrogen bond.

5. The crystal according to claim 1, wherein the crystal comprises at least one substance selected from the group consisting of an organic compound, a transition metal complex, an inorganic substance, and an elemental substance.

6. A method of producing the crystal according to any one of claims 1 to 5, the method comprising:

   a step of preparing a solution containing the silanol compounds; and
   a step of carrying out recrystallization by a vapor diffusion process applied to the solution and optionally by further adding at least one substance selected from the group consisting of an organic compound, a transition metal complex, an inorganic substance, and an elemental substance to the solution.

7. A method of producing the crystal according to any one of claims 1 to 5, the method comprising:

   a step of preparing a solution containing the silanol compounds; and
   a step of carrying out recrystallization by a poor solvent process applied to the solution and optionally by further adding at least one substance selected from the group consisting of an organic compound, a transition metal complex, an inorganic substance, and an elemental substance to the solution.

**8.** A method of producing the crystal according to any one of claims 1 to 5, the method comprising:

a step of preparing a solution containing the silanol compounds; and
a step of carrying out recrystallization by concentrating the solution under reduced pressure and optionally by further adding at least one substance selected from the group consisting of an organic compound, a transition metal complex, an inorganic substance, and an elemental substance to the solution.

**9.** A method of producing the crystal according to any one of claims 1 to 5, the method comprising:

a step of preparing a solution containing the silanol compounds; and
a step of carrying out recrystallization by cooling the solution and optionally by further adding at least one substance selected from the group consisting of an organic compound, a transition metal complex, an inorganic substance, and an elemental substance to the solution.

**10.** A method of producing the crystal according to any one of claims 1 to 5, the method comprising:

a step of preparing a solution containing the silanol compounds; and
a step of carrying out recrystallization by heating the solution and optionally by further adding at least one substance selected from the group consisting of an organic compound, a transition metal complex, an inorganic substance, and an elemental substance to the solution.

**11.** A method of producing a crystal (P) comprising at least one substance selected from the group consisting of an organic compound, a transition metal complex, an inorganic substance, and an elemental substance, the method comprising:

a step of preparing a crystal (S) comprising a plurality of silanol compounds represented by the following formula (1), having an interaction via a hydrogen bond by at least one hydroxy group between the silanol compounds, and comprising at least one first substance selected from the group consisting of an organic compound, a transition metal complex, an inorganic substance, and an elemental substance; and
a step of obtaining the crystal (P) by contacting the crystal (S) with at least one second substance selected from the group consisting of an organic compound, a transition metal complex, an inorganic substance, and an elemental substance to replace at least a part of the first substance contained in the crystal (S) with the second substance.

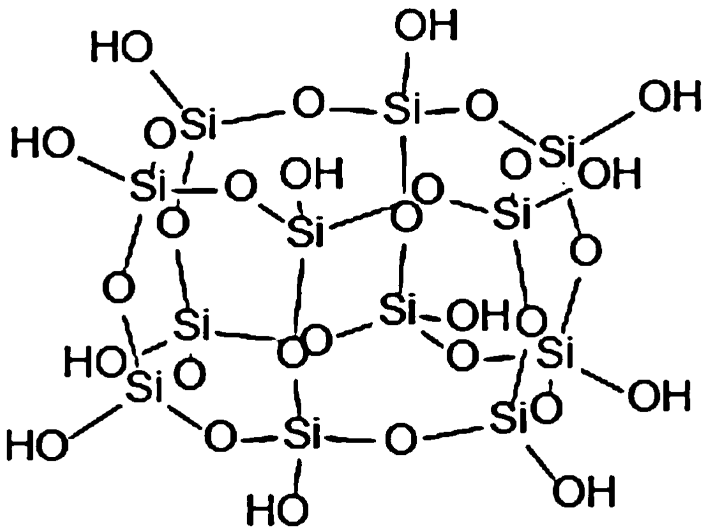

(1)

**12.** The method according to claim 11, wherein the step of preparing a crystal (S) comprises:

a step of preparing a solution containing the silanol compounds; and
a step of carrying out recrystallization by a vapor diffusion process applied to the solution, or by a poor solvent process applied to the solution, or by concentrating the solution under reduced pressure, or by cooling the solution, or by heating the solution, and optionally by further adding at least one substance selected from the

group consisting of an organic compound, a transition metal complex, an inorganic substance, and an elemental substance to the solution.

**13.** A method of self-organizing a silanol compound represented by the following formula (1), the method comprising: a step of forming an interaction by a hydrogen bond by a vapor diffusion process applied to a solution containing the silanol compound, or by a poor solvent process applied to the solution, or by concentrating the solution under reduced pressure, or by cooling the solution, or by heating the solution.

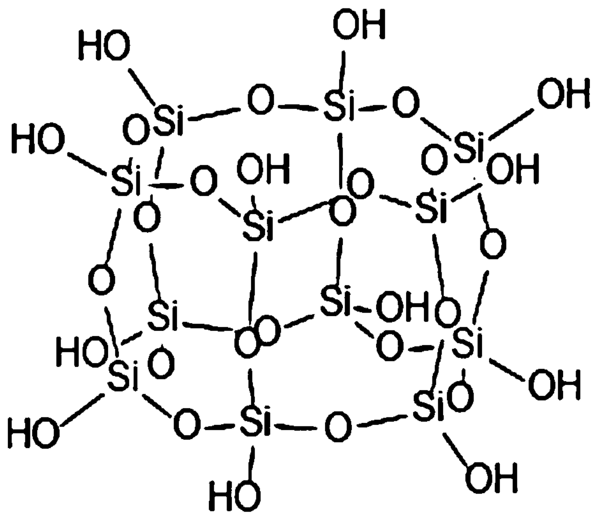

(1)

[Figure 1]

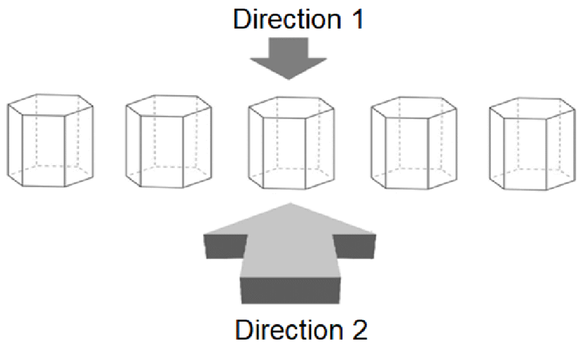


[Figure 2]

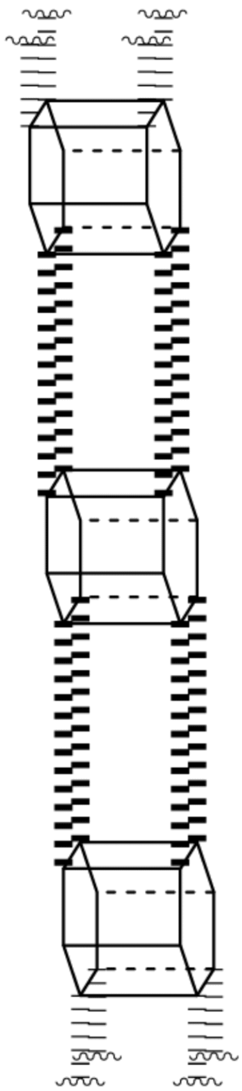

[Figure 3]

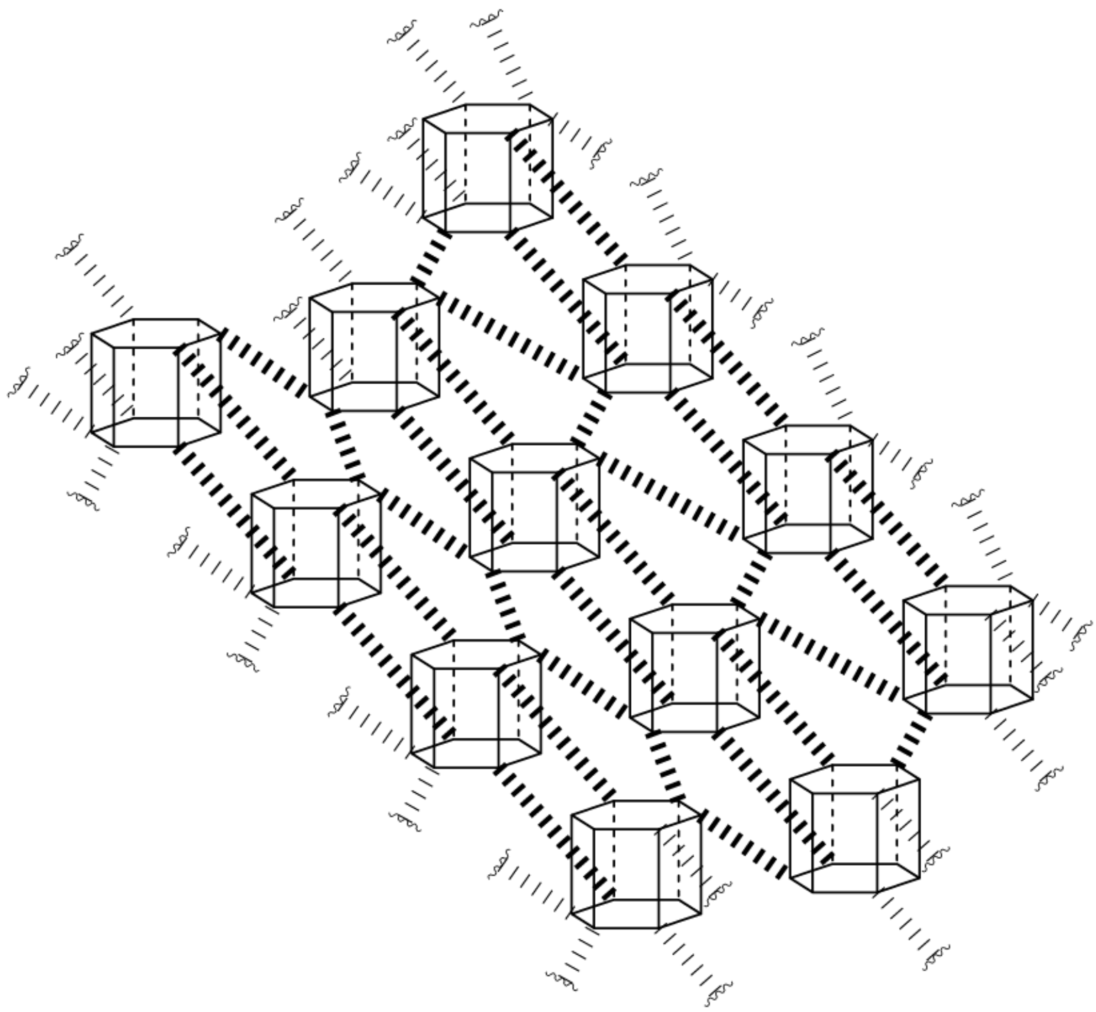

[Figure 4]

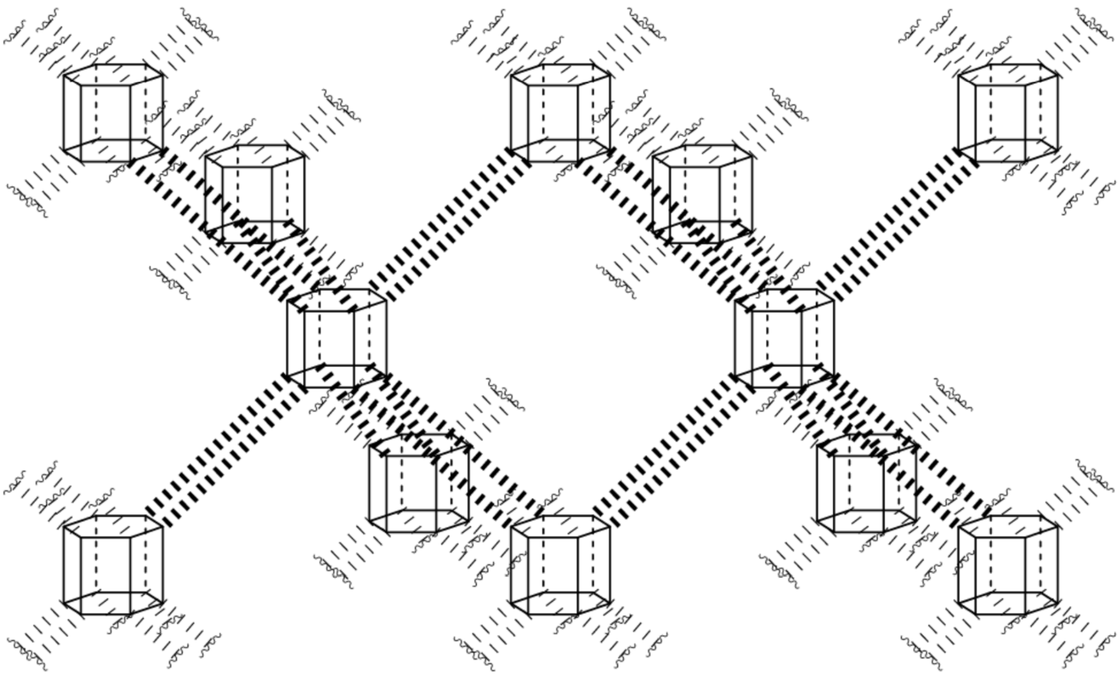

[Figure 5]

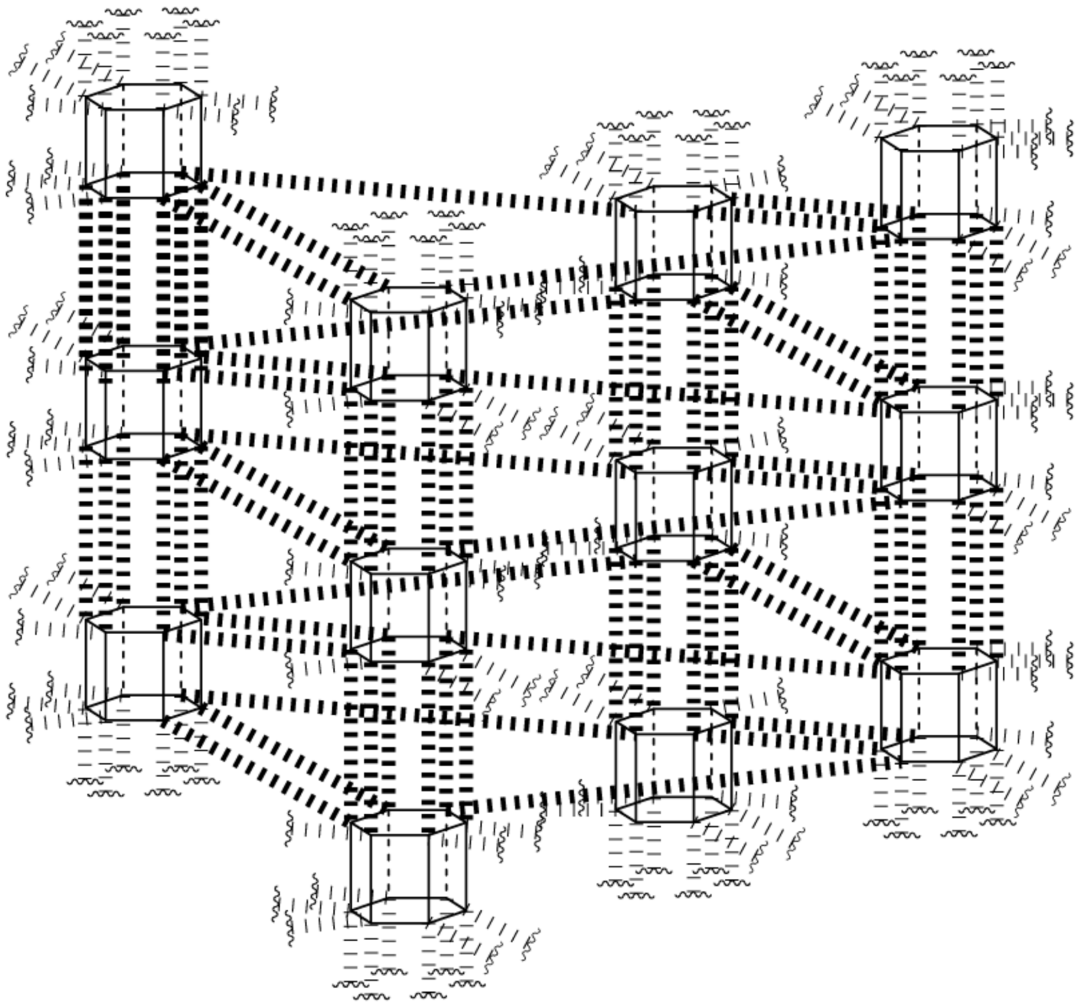

[Figure 6]

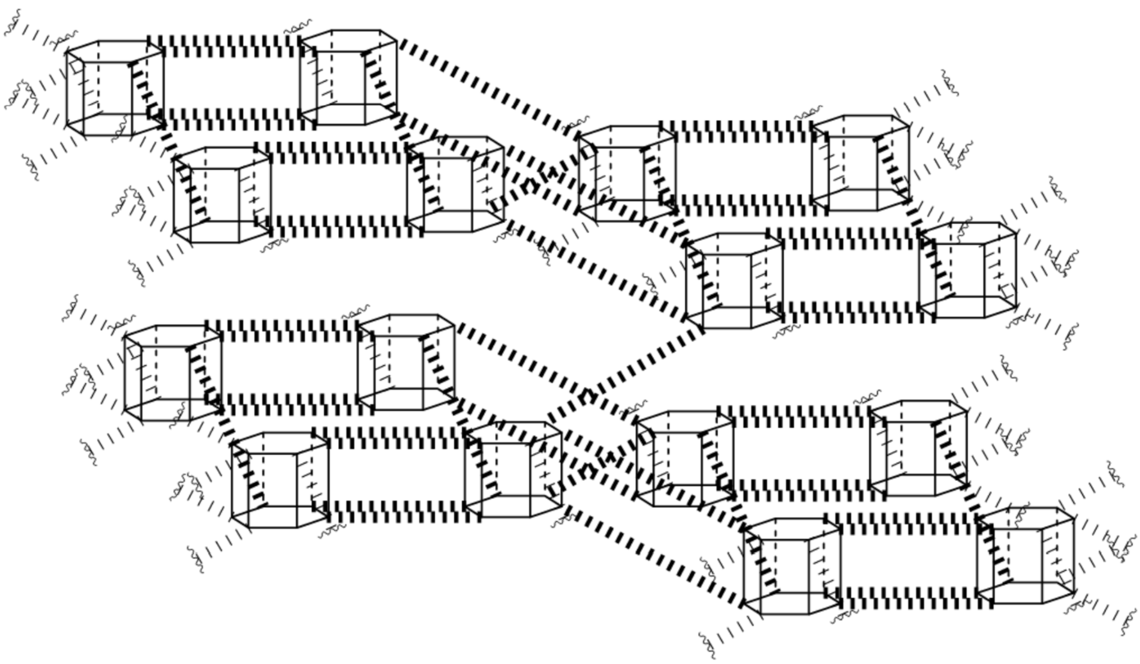

[Figure 7]

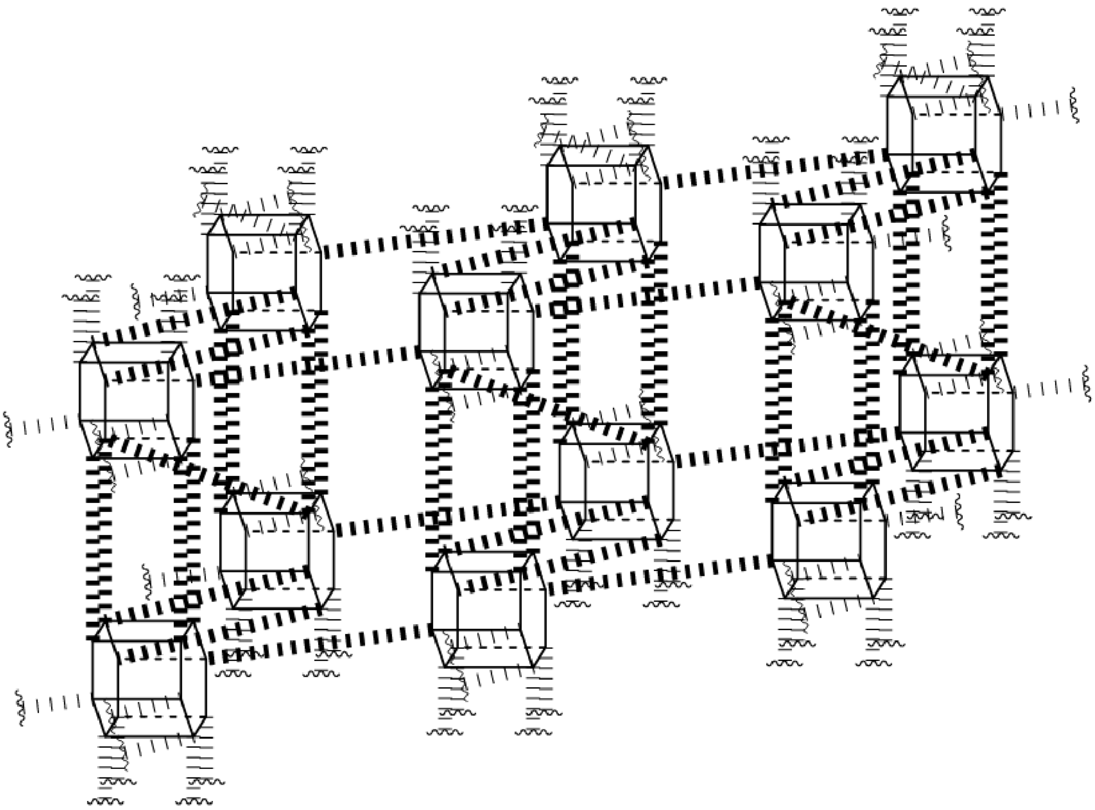

[Figure 8]

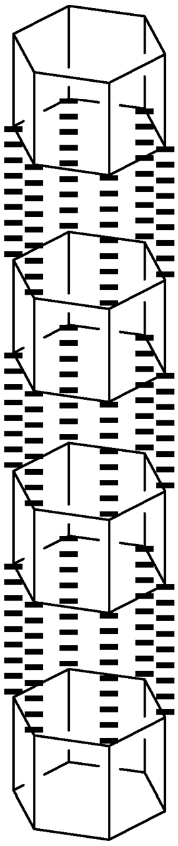

[Figure 9]

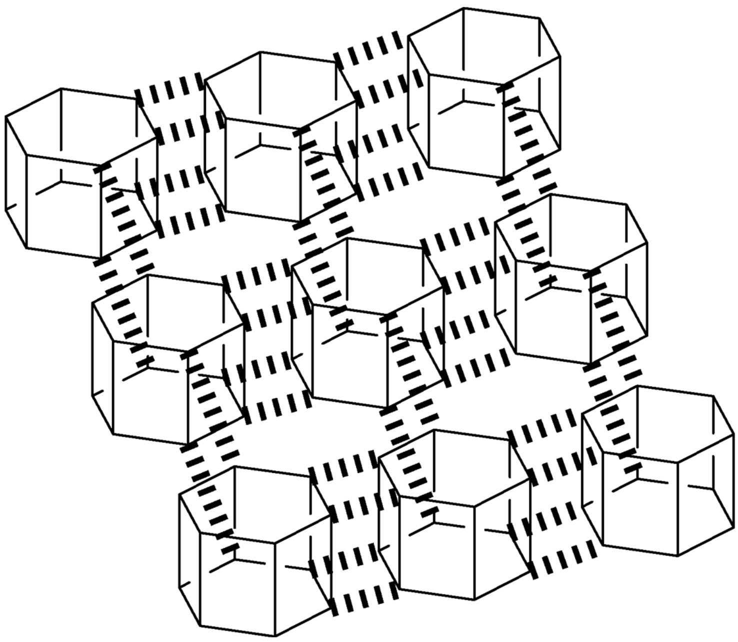

[Figure 10]

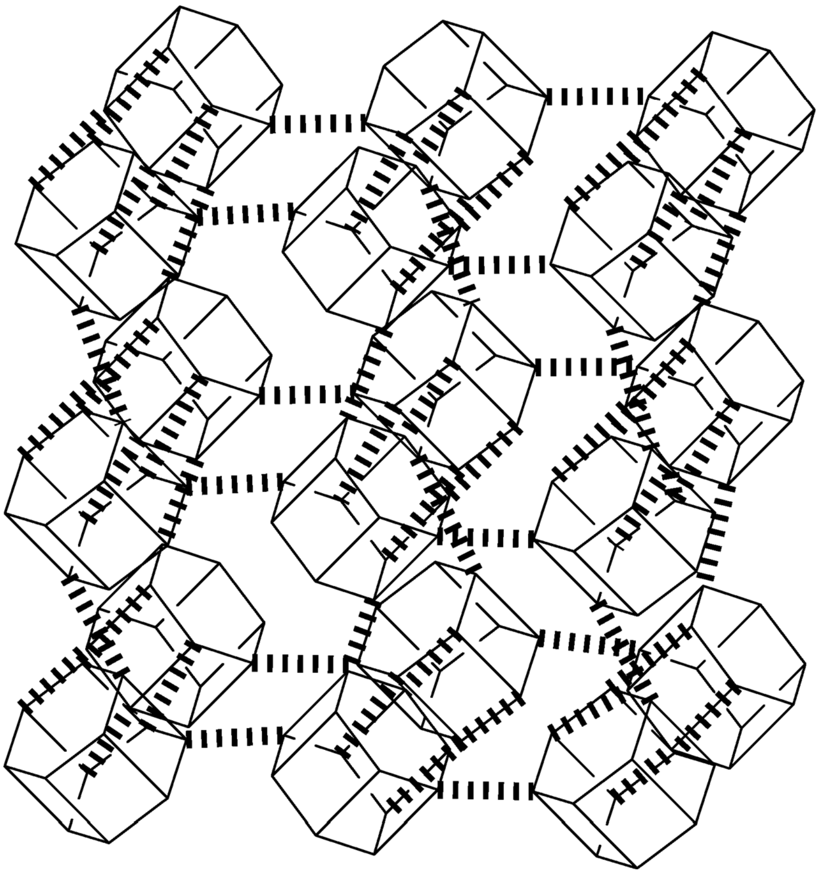

[Figure 11]

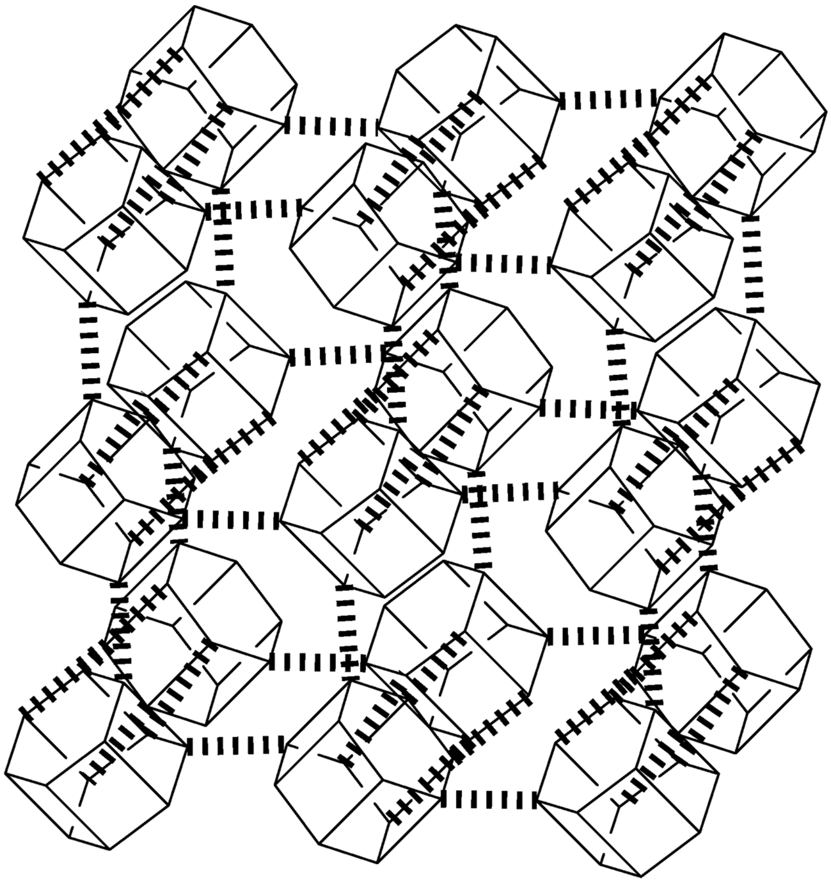

## INTERNATIONAL SEARCH REPORT

International application No.
**PCT/JP2024/033245**

**A. CLASSIFICATION OF SUBJECT MATTER**

***C01B 33/02***(2006.01)i
FI: C01B33/02 Z

According to International Patent Classification (IPC) or to both national classification and IPC

**B. FIELDS SEARCHED**

Minimum documentation searched (classification system followed by classification symbols)

C01B33/02; C01B33/113; C30B29/60; C30B29/18; C30B7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2021-127345 A (NATIONAL INSTITUTE OF ADVANCED INDUSTRIAL SCIENCE AND TECHNOLOGY) 02 September 2021 (2021-09-02)<br>claims, paragraphs [0012], [0023]-[0064], examples 5, 13-15, 17-19, 21, 23-24, 34-35, 39, 46-48 | 1-10, 12-13 |
| Y | | 2-9, 11-13 |
| Y | WO 2020/085403 A1 (NATIONAL INSTITUTE OF ADVANCED INDUSTRIAL SCIENCE AND TECHNOLOGY) 30 April 2020 (2020-04-30)<br>claims, examples 1-3 | 2-9, 11-13 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**
**Information on patent family members**

International application No.
**PCT/JP2024/033245**

| Patent document cited in search report | Publication date (day/month/year) | Patent family member(s) | Publication date (day/month/year) |
|---|---|---|---|
| JP 2021-127345 A | 02 September 2021 | US 2021/0061824 A1<br>claims, paragraphs [0012], [0037]-[0073], examples 5, 13-15, 17-19, 21, 23-24, 34-35, 39, 46-48<br>US 2022/0056056 A1<br>WO 2018/193732 A1<br>EP 3613749 A1<br>CN 110520430 A<br>CN 116354352 A | |
| WO 2020/085403 A1 | 30 April 2020 | US 2022/0081305 A1<br>claims, examples 1-3<br>EP 3872240 A1<br>CN 113195801 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023151414 A


### Non-patent literature cited in the description


- *Nature Communications*, 2017, vol. 8, 140
- *Angew. Chem. Int. Ed. Engl.*, 1997, vol. 36, 743
- *Crystals*, 2018, vol. 8, 457
- *CHEMICAL ABSTRACTS*, 126347-25-9